# EUROPEAN PATENT SPECIFICATION

(11) **EP 3 897 067 B1**
(45) Date of publication and mention of the grant of the patent: **01.11.2023**
(21) Application number: 19901274.1
(22) Date of filing: 30.09.2019
(51) Int. Cl.: H04W 76/16, H04W 12/041, H04W 12/106, H04W 12/037

(54) **ANCHOR POINT DETERMINATION METHOD AND SYSTEM FOR SUPPORTING DUAL CONNECTIVITY, COMMUNICATION DEVICE, AND COMPUTER READABLE MEDIUM**
VERFAHREN UND SYSTEM ZUR BESTIMMUNG EINES ANKERPUNKTES ZUR UNTERSTÜTZUNG VON DUALER KONNEKTIVITÄT, KOMMUNIKATIONVORRICHTUNG UND COMPUTERLESBARES MEDIUM
PROCÉDÉ ET SYSTÈME DE DÉTERMINATION DE POINT D'ANCRAGE POUR PRENDRE EN CHARGE UNE DOUBLE CONNECTIVITÉ, DISPOSITIF DE COMMUNICATION ET SUPPORT LISIBLE PAR ORDINATEUR

(30) Priority: 19.12.2018 CN 201811555375
(43) Date of publication of application: 20.10.2021
(73) Proprietor: ZTE Corporation, Shenzhen, Guangdong 518057 (CN)
(72) Inventor: WANG, Zhuanli, Shenzhen, Guangdong 518057 (CN); HUANG, Xueying, Shenzhen, Guangdong 518057 (CN); DU, Gaopeng, Shenzhen, Guangdong 518057 (CN); SI, Wei, Shenzhen, Guangdong 518057 (CN)
(74) Representative: Savi, Massimiliano
(86) International application number: PCT/CN2019/109624
(87) International publication number: WO 2020/125133

(56) References cited:
- CN-A- 108 566 672
- CN-A- 108 990 116
- CN-A- 109 618 419
- ROST PETER ET AL: "Network Slicing to Enable Scalability and Flexibility in 5G Mobile Networks", IEEE COMMUNICATIONS MAGAZINE, IEEE SERVICE CENTER, PISCATAWAY, US, vol. 55, no. 5, 1 May 2017 (2017-05-01), pages 72-79, XP011649168, ISSN: 0163-6804, DOI: 10.1109/MCOM.2017.1600920 [retrieved on 2017-05-11]
- RAVANSHID AZAD ET AL: "Multi-connectivity functional architectures in 5G", 2016 IEEE INTERNATIONAL CONFERENCE ON COMMUNICATIONS WORKSHOPS (ICC), IEEE, 23 May 2016 (2016-05-23), pages 187-192, XP032919911, DOI: 10.1109/ICCW.2016.7503786 [retrieved on 2016-07-05]
- CATT: "PDCP data recovery for NE-DC", 3GPP TSG-RAN WG2 Meeting #103, R2-1811226, 24 August 2018 (2018-08-24), XP051520897,
- Samsung: "Bearer handling in NR-E-UTRA Dual Connectivity", 3GPP TSG-RAN WG2 Meeting #101, R2-1802202, 2 March 2018 (2018-03-02), XP051399154,

## Description

### TECHNICAL FIELD

Embodiments of the present application relate to the technical field of wireless communication, for example, to an anchor point determination method and system for supporting dual connectivity, a communication device and a computer-readable medium.

### BACKGROUND

With the advent of the Fifth-generation (5G) era, in the initial stage of 5G application, 5G base stations are most likely to be used in conjunction with the surrounding Long Term Evolution (LTE) base stations by means of hot spot mixed deployment, and 5G will be used first in hot spots and high-traffic areas. Since 5G cores and 5G User Equipment (UE) are not mature for commercial use, Evolved Packet Cores (EPCs) are used for data transmission, and UE accesses 5G air interface resources through LTE and uses the 5G air interface resources through dual connectivity. The Third Generation Partnership Project (3GPP) defines this architecture as Option3. Dual connectivity is defined as Evolved-Universal Mobile Telecommunication System Terrestrial Radio Access-New Radio (E-UTRA-NR) Dual Connectivity (ENDC). Such 5G networks cannot provide end-to-end services alone, but need a network architecture that relies on LTE networks to provide services, which is collectively called Non-standalone Architecture (NSA) networking. For the sake of clarity, a UE with an ENDC capability under an NSA network is described as a 5G UE herein.

ENDC realizes the cooperation between LTE and 5G systems. In the continuous wide-area coverage scenario, users are connected to multiple cells or service cell groups at the same time, which helps to reduce time delay, avoid service interruption and maintain service continuity in a handover process. Under the high-capacity coverage of hot spots, users can use the wireless resources of multiple cells to transmit data at the same time through dual connectivity, which can improve user throughput and meet the high-capacity requirements of the hot spots. For low-latency and high-reliability scenarios, using multiple links to transmit data and control messages can improve the transmission speed and reliability of the data or signalling.

The article ROST PETER ET AL: "Network Slicing to Enable Scalability and Flexibility in 5G Mobile Networks", IEEE COMMUNICATIONS MAGAZINE, IEEE SERVICE CENTER, PISCATAWAY, US, vol. 55, no. 5, 1 May 2017 (2017-05-01), pages 72-79, ISSN: 0163-6804, DOI: 10.1109/MCOM.2017.1600920, argues for network slicing as an efficient solution that addresses the diverse requirements of 5G mobile networks, thus provid-ing the necessary flexibility and scalability associated with future network implementations.

The paper RAVANSHID AZAD ET AL: "Multi-connectivity functional architectures in 5G", 2016 IEEE INTERNATIONAL CONFERENCE ON COMMUNICATIONS WORKSHOPS (ICC), IEEE, 23 May 2016 (2016-05-23), pages 187-192, DOI: 10.1109/ICCW.2016.7503786 discusses different options to connect to multiple radio access points. Each of these options is further detailed, novel functionality required for multi-connectivity is introduced, and expected benefits are explained.

### SUMMARY

The invention is defined in the independent claims that provide an anchor point determination method and a system for supporting dual connectivity, a communication device and a computer-readable medium, which can improve user experience in dual connectivity scenarios.

An embodiment of the present application provides an anchor point determination system for supporting dual connectivity, including: a Packet Co-operate Engine (PCE), a Master Node (MN) and a Secondary Node (SN), where the MN and SN are respectively connected to the PCE; a New Radio (NR) Packet Data Convergence Protocol (PDCP) layer is deployed on the PCE; and the MN and the SN are configured to select the same PCE as a PDCP anchor point for a User Equipment (UE) in response to the UE establishing dual connectivity with an LTE base station and an NR base station, where the LTE base station is the MN and the NR base station is the SN, or the NR base station is the MN and the LTE base station is the SN.

An embodiment of the present application provides an anchor point determination method for supporting dual connectivity, including: selecting, by a Master Node (MN) of a User Equipment (UE) in response to establishing communication connection with the UE, a Packet Co-operate Engine (PCE) deployed with a New Radio (NR) Packet Data Convergence Protocol (PDCP) layer as a PDCP anchor point for the UE; sending, by the MN, an SN addition request message to an SN of the UE, where the SN addition request message carries at least a security key of the MN, and information of the PCE selected by the MN for the UE; receiving, by the MN, an SN addition acknowledge message sent by the SN, where the SN addition acknowledge message carries selection information of the security key of the MN, and the selection information is used to instruct a PCE selected by the SN for the UE to be the same as the PCE selected by the MN for the UE; and sending, by the MN, a Radio Resource Control (RRC) connection reconfiguration message to the UE, where the RRC connection reconfiguration message carries the selection information of the security key of the MN; and where the MN is a Long Term Evolution (LTE) base station, and the SN is an NR base station; or the MN is an NR base station and the SN is an LTE base station.

An embodiment of the present application provides an anchor point determination method for supporting dual connectivity, including: selecting, by an SN of a UE after receiving an SN addition request message sent by an MN, a PCE deployed with an NR PDCP layer as a PDCP anchor point for the UE, where the PCE selected by the SN is the same as a PCE selected by the MN of the UE; sending a bearer establishment request message to the PCE by the SN; and sending an SN addition acknowledge message to the MN by the SN after receiving a bearer establishment response message sent by the PCE, where the SN addition acknowledge message carries selection information of a security key of the MN, where the MN is an LTE base station, and the SN is an NR base station; or the MN is an NR base station and the SN is an LTE base station.

An embodiment of the present application provides an anchor point determination method for supporting dual connectivity, which is applied to a PCE deployed with an NR PDCP layer, including: receiving, by the PCE, a bearer establishment request message sent by an LTE base station or an NR base station; and querying, by the PCE according to bearer information carried by the bearer establishment request message, a PDCP entity corresponding to the bearer information, and determining, according to whether the bearer establishment request message carries security information, whether the security information used by the PDCP entity corresponding to the bearer information changes.

An embodiment of the present application provides a communication device, including: a first memory and a first processor, where the first memory is adapted to store an anchor point determination program for supporting dual connectivity which, when executed by the first processor, causes the processor to perform a method on an MN side of a UE.

An embodiment of the present application provides a communication device, including: a second memory and a second processor, where the second memory is adapted to store an anchor point determination program for supporting dual connectivity which, when executed by the second processor, causes the second processor to perform a method on an SN side of a UE.

An embodiment of the present application provides a communication device, including: a third memory and a third processor, where the third memory is adapted to store an anchor point determination program for supporting dual connectivity which, when executed by the third processor, causes the third processor to perform a method on the PCE side described above.

An embodiment of the present application further provides a computer-readable medium storing an anchor point determination program for supporting dual connectivity which, when executed by a processor, causes the processor to perform the method provided by any one of the embodiments described above.

### BRIEF DESCRIPTION OF DRAWINGS

Fig. 1 is a hierarchical diagram of an ENDC protocol in 3GPP TS 33401;
Fig. 2 is a schematic diagram of a key derivation process of ENDC in 3GPP TS 33401;
Fig. 3 is a schematic diagram of an ENDC security process in 3GPP TS 33401;
Fig. 4 is a schematic diagram of an anchor point determination system for supporting dual connectivity provided by an embodiment of the present application;
Fig. 5 is an example diagram of protocol hierarchy of an anchor point determination system for supporting dual connectivity;
Fig. 6 is a flowchart of an anchor point determination method for supporting dual connectivity;
Fig. 7 is a flowchart of another anchor point determination method for supporting dual connectivity;
Fig. 8 is a flowchart of still another anchor point determination method for supporting dual connectivity;
Fig. 9 is a schematic diagram of an exemplary implementation;
Fig. 10 is a schematic diagram of another exemplary implementation;
Fig. 11 is a schematic diagram of still another exemplary implementation;
Fig. 12 is a schematic diagram of yet another exemplary implementation;
Fig. 13 is a schematic diagram of yet still exemplary implementation;
Fig. 14 is a schematic diagram of yet still exemplary implementation;
Fig. 15 is a schematic diagram of yet still exemplary implementation;
Fig. 16 is a schematic diagram of yet still exemplary implementation;
Fig. 17 is a schematic diagram of yet still exemplary implementation;
Fig. 18 is a schematic diagram of a communication device;
Fig. 19 is a schematic diagram of another communication device;
Fig. 20 is a schematic diagram of still another communication device;

### DETAILED DESCRIPTION

Embodiments of the present application will be described with reference to the accompanying drawings. Embodiments in the present application and features in the embodiments can be combined to derive other embodiments not explicitly described.

The steps shown in the flowcharts of the drawings may be performed in a computer system, such as with a set of computer-executable instructions. Moreover, although a logical order is shown in the flowcharts, the steps shown or described may be performed, in some cases, in a different order than shown or described herein.

Under an ENDC architecture, in terms of protocol, the requirements for bearers are as follows: a New Radio (NR) Packet Data Convergence Protocol (PDCP) may be used for Master Cell Group (MCG) Split bearers, Secondary Cell Group (SCG) bearers and SCG Split (hereinafter referred to as SS) bearers; an LTE PDCP or an NR PDCP may be used for MCG bearers; and for MCG/MCGSplit bearers, NR PDCP configuration is generated by a Master Node (MN) in dual connectivity, while for SCG/SCGSplit bearers, NR PDCP configuration is generated by a Secondary Node (SN) in dual connectivity.

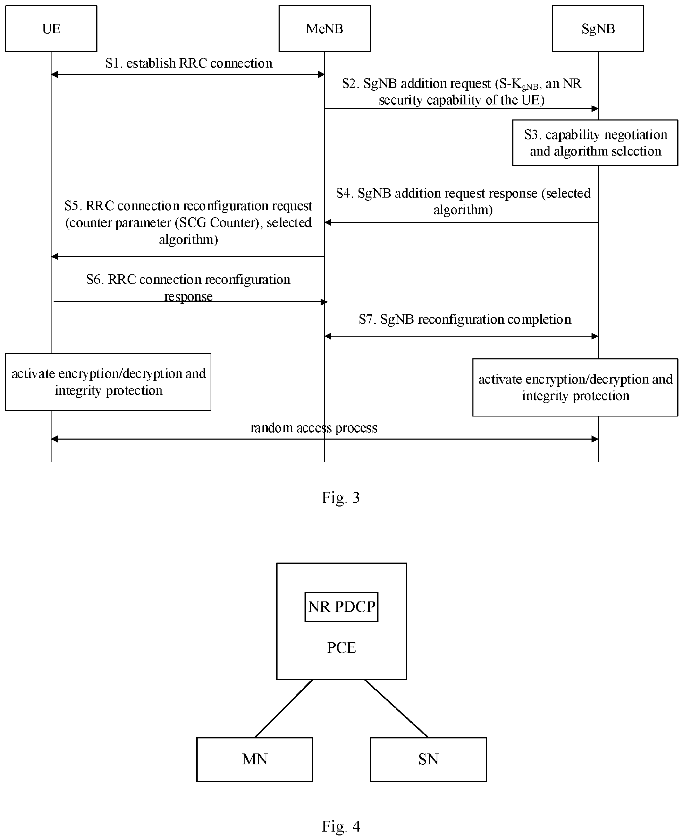

Based on the above ENDC protocol architecture, when establishing dual connectivity, a large amount of signalling and data need to cooperate between an LTE base station, an NR base station and the EPC, which significantly increases the processing overhead. When users enter or exit the coverage of 5G cells, it is necessary to frequently migrate PDCP anchor points between 4G cells and the 5G cells. When users move between successive coverages of 5G cells, it is necessary to frequently migrate PDCP anchor points between the 5G cells. When migrating PDCP anchor points, it is necessary to inform a core network to modify an S1 downlink address. When frequently entering or exiting the coverage of 5G cells, it will cause a lot of signalling impact on the core network. When an MCG/MCG Split bearer is established for 5G UE, PDCP traffic of the 5G UE is carried on an LTE system, which will inevitably affect the existing LTE capability. The claimed invention corresponds to fig. 4 and to the related text in the description, the other figures and the remaining text of the description are only intended to better explain the claimed invention.

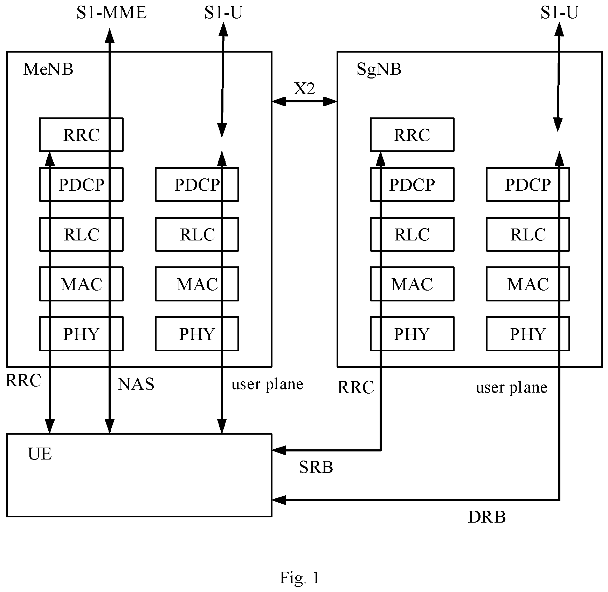

Fig. 1 is a hierarchical diagram of an ENDC protocol in 3GPP TS 33401. As shown in Fig. 1, an LTE eNB serves as a Master eNB (MeNB) and gNB serves as a secondary Secondary gNB (SgNB), and the MeNB and the SgNB are interconnected through an X2 interface. The MeNB and the SgNB are both deployed with Radio Resource Control (RRC) entities for realizing RRC signalling transmission with a User Equipment (UE). On the MeNB side, RRC signalling may be transmitted through an RRC entity, a Packet Data Convergence Protocol (PDCP) layer, an RLC (Radio Link Control) protocol layer, an Medium Access Control (MAC) protocol layer and a Physical layer (PHY); and user plane data may be transmitted through a PDCP layer, an RLC protocol layer, an MAC protocol layer and a PHY. On the SgNB side, RRC signalling may be transmitted through an RRC entity, a PDCP layer, an RLC protocol layer, an MAC protocol layer and a PHY; and user plane data may be transmitted through a PDCP layer, an RLC protocol layer, an MAC protocol layer and a PHY. The MeNB may be in Non-Access Stratum (NAS) communication with the core network through an S1-Mobility Management Entity (MME) interface, and may communicate user plane data with a core network through an S1-U interface; and the SgNB may communicate user plane data with a core network through an S1-U interface. In Fig. 1, SRB stands for Signalling Radio Bearer (SRB), and DRB stands for Data Radio Bearer (DRB).

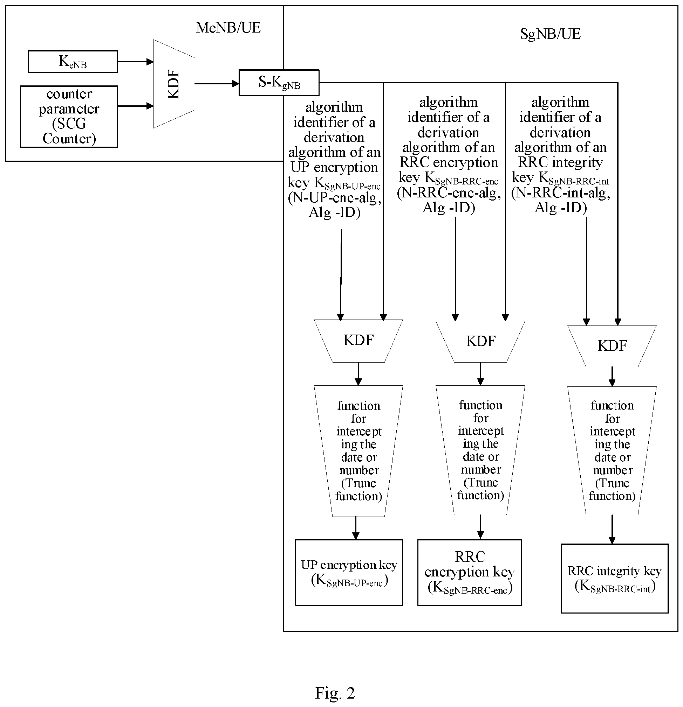

Fig. 2 is a schematic diagram of a key derivation process of ENDC in 3GPP TS 33401. As shown in Fig. 2, the UE and the MeNB may derive a security key S-K_{gNB} of the SgNB from an SCG Counter and a security key K_{eNB}, and the SgNB and the UE may derive from the S-K_{gNB} an input key K_{SgNB-UP-enc} used as a User Plane (UP) security algorithm, an input key K_{SgNB-RRC-int} used as_{SGN} an RRC integrity algorithm, and an input key K_{SgNB-RRC-enc} used as an RRC privacy algorithm. KDF stands for Key Derivation Function (KDF); and Trunc function is used to intercept the date or number and return a specified value. In Fig. 2, N-UP-enc-alg, Alg-ID represents an algorithm identifier of a derivation algorithm of UP encryption key K_{SgNB-UP-enc}, N-RRC-enc-alg, Alg-ID represents an algorithm identifier of a derivation algorithm of an RRC encryption key K_{SgNB-UP-enc}, and N-RRC-int-alg, Alg-ID represents an algorithm identifier of a derivation algorithm of an RRC integrity key K_{SgNB-RRC-int}.

Fig. 3 is a schematic diagram of an ENDC security process in 3GPP TS 33401. As shown in Fig. 3, the ENDC security process includes the following steps.

At S1, the UE and the MeNB establish an RRC connection.

At S2, before the MeNB decides to use dual connectivity for some DRBs and/or SRBs, the MeNB checks whether the UE has an NR capability and is authorized to access NR. The MeNB sends an SgNB addition request message to the SgNB through an X2-C interface (where the addition request message may carry the S-K_{gNB} and an NR security capability of the UE) to negotiate an available resource, configuration and algorithm on the SgNB side.

At S3, the SgNB allocates necessary resources and selects an encryption algorithm and an integrity algorithm for the DRB and the SRB.

At S4, the SgNB sends an SgNB addition request response message to the MeNB, indicating the availability of the requested resource and the identifier of the selected algorithm for serving the requested DRB and/or SRB.

At S5, the MeNB sends an RRC connection reconfiguration request message to the UE to instruct the UE to configure a new DRB and/or SRB for the SgNB. The RRC connection reconfiguration request message may include an SCG counter parameter (SCG counter) to indicate that if a new key is needed, the UE may calculate the S-K_{gNB} for the SgNB.

At S6, the UE receives the RRC connection reconfiguration request message, and the UE may calculate the S-K_{gNB} for the SgNB if the RRC connection reconfiguration request message contains the SCG counter parameter (SCG counter). The UE may also calculate the K_{SgNB-UP-enc}, K_{SgNB-RRC-int} and K_{SgNB-RRC-enc} for the associated DRB and/or SRB. The UE sends the RRC connection reconfiguration response message to the MeNB. The UE may activate a selected encryption/decryption and integrity protection at this time.

At S7, the MeNB sends an SgNB reconfiguration completion message to the SgNB through an X2-C interface to inform the SgNB of a configuration result. After receiving this message, the SgNB may activate the selected encryption/decryption and integrity protection.

With reference to Figs. 1 to 3, when no SN is added, a security anchor point (i.e., a PDCP anchor point) is on the MeNB side, and after an SN is added, the security anchor point migrates to the SgNB side. However, the SN is established or deleted at any time according to the UE requirements. With the addition or deletion of the SN, the security anchor point will be changed accordingly. With the change of the security anchor point, the security processing also needs to be changed accordingly, and the change of the security processing will trigger the operations of the PDCP layer re-establishment, RLC layer re-establishment and MAC reset (RESET), which will result in the interruption of service data and the phenomenon of data packet loss on the air interface, which will seriously affect the user experience.

The embodiments of the present application provide an anchor point determination method and system for supporting dual connectivity. The Master Node (MN) and the Secondary Node (SN) of the UE select the same Packet Co-operate Engine (PCE) as the PDCP anchor point for the UE, thereby ensuring that the PDCP anchor point remains unchanged in the process of adding or deleting the SN, so that the security information used for data transmission of the UE does not need to be changed, thereby avoiding data interruption in the process of changing the security information, and improving the user's service experience.

Fig. 4 is a schematic diagram of an anchor point determination system for supporting dual connectivity provided by an embodiment of the present application. As shown in Fig. 4, the anchor point determination system provided by this embodiment includes: a Packet Co-operate Engine (PCE), a Master Node (MN) and a Secondary Node (SN), where an NR PDCP layer is deployed on the PCE. The MN and the SN are respectively connected to the PCE. In the present application, the number of PCEs and the number of MNs and SNs connected to each PCE are not limited. Only one PCE, one MN and one SN are drawn in Fig. 4 as an example. However, the present application is not limited to this.

In this embodiment, the Master Node (MN) and the Secondary Node (SN) are configured to select the same PCE as a PDCP anchor point for a UE in response to the UE establishing dual connectivity with an LTE base station and an NR base station, where the LTE base station is the MN and the NR base station is the SN, or the NR base station is the MN and the LTE base station is the SN. Based on this, by avoiding the change of the PDCP anchor point, the change of security processing is avoided, thereby avoiding data interruption and improving the user's service experience.

In an exemplary implementation, a PDCP entity created for a radio bearer of the UE in the NR PDCP layer of the PCE is configured to use security information, which is derived from a security key of the MN, after the MN selects a PCE as the PDCP anchor point for the UE; and the PDCP entity is further configured to use the security information that remains unchanged after the SN selects the PCE as the PDCP anchor point for the UE. In other words, in the SN addition process, the MN and the SN select the same PCE as the PDCP anchor point, and remain the PDCP anchor point unchanged, thereby ensuring that the security information used for data transmission of the UE does not need to be changed.

In this exemplary implementation, the MN may be configured to still retain the selected PCE as the PDCP anchor point in response to determining to delete the SN, and the security information used by the PDCP entity on the PCE remains unchanged. In other words, in the SN deletion process, the PCE selected by the MN remains unchanged, and the PDCP anchor point remains unchanged, thereby ensuring that the security information used for data transmission of the UE does not need to be changed.

In an exemplary implementation, the fact that the LTE base station is the MN and the NR base station is the SN is taken as an example. When the MN establishes a communication connection with the UE, a PCE is selected as the PDCP anchor point for the UE from PCEs connected to the MN, where the PDCP entity created for the radio bearer of the UE in the NR PDCP layer of the PCE uses the security information (e.g., including an RRC integrity key K_{RRCint}, an RRC encryption key K_{RRCenc} and a user plane encryption key K_{UPenc}) derived from a security key (K_{eNB}) of the MN. In the SN addition process, the MN is configured to send an SN addition request message to the SN, where the SN addition request message may carry at least the security key (K_{eNB}) of the MN, information of the PCE (e.g., the PCE Identity (ID)) selected by the MN for the UE, and bearer information of the LTE; and after receiving the SN addition request message, the SN selects the same PCE as the MN to serve as the PDCP anchor point, and determines to use the security key (K_{eNB}) of the MN. The SN sends a bearer establishment request message to the selected PCE, where the bearer establishment request message may carry the bearer information of the UE. After receiving the bearer establishment request message from the SN, the PCE finds the corresponding PDCP entity according to bearer information carried in the bearer establishment request message, determines that the security information used by the PDCP entity remains unchanged, and returns a bearer establishment response message to the SN. After receiving the bearer establishment response message, the SN sends an SN addition acknowledge message to the MN, where the SN addition acknowledge message may carry selection information of the security key (K_{eNB}) of the MN. After receiving the SN addition acknowledge message, the MN sends an RRC connection reconfiguration message to the UE, where the RRC connection reconfiguration message may carry the selection information of the security key (K_{eNB}) of the MN, for example, a SecurityConfig.keyToUse cell in the RRC connection reconfiguration message is used to select the security key K_{eNB}. In this exemplary implementation, in the process of adding the SN to the UE by the MN, the MN and the SN select the same PCE as the PDCP anchor point, which ensures that the security information used by the PDCP entity on the PCE that corresponds to the radio bearer (e.g., data radio bearer) of the UE remains unchanged, so that the security information used for data transmission of the UE remains unchanged, thereby avoiding data interruption caused by the change of the security information.

In the above exemplary implementation, the MN may still select the previous PCE (that is, the PCE selected jointly by the MN and the SN) as the PDCP anchor point in response to determining to delete the SN from the UE. In the SN deletion process of the UE, the MN sends a bearer establishment request message to the PCE, where the bearer establishment request message may carry bearer information of the UE; and after receiving the bearer establishment request message from the MN, the PCE finds the corresponding PDCP entity according to bearer information carried in the bearer establishment request message, determines that the security information used by the PDCP entity remains unchanged, and returns a bearer establishment response message to the MN. After receiving the bearer establishment response message, the MN sends an RRC connection reconfiguration message to the UE, where the RRC connection reconfiguration message may carry the selection information of the security key (KeNB) of the MN, for example, a SecurityConfig.keyToUse cell in the RRC connection reconfiguration message is used to select the security key K_{eNB}. In this exemplary implementation, in the process of deleting the SN from the UE by the MN, the selected PCE remains unchanged, which ensures that the security information used by the PDCP entity of the PCE remains unchanged, so that the security information used for data transmission of the UE remains unchanged, thereby avoiding data interruption caused by the change of the security information.

In an exemplary implementation, the PCE selected by the MN and the SN for the UE is configured to receive new security information from the SN in response to the MN triggering the updating of a security key or the SN triggering the updating of a security key, where the new security information is derived according to a new security key; and the PCE may be further configured to suspend the sending of downlink data and the receiving of uplink data after receiving a gate close message of the MN or the SN, and to trigger the re-establishment of a PDCP. For example, the PCE may be adapted to suspend the data transmission with the MN after receiving the gate close message of the MN and to suspend the data transmission with the SN after receiving the gate close message of the SN. For example, the PCE may trigger the re-establishment of the PDCP after receiving the gate close messages of the MN and SN. Alternatively, the PCE may trigger the re-establishment of the PDCP after receiving the gate close message of the MN, or trigger the re-establishment of the PDCP after receiving the gate close message of the SN.

In this exemplary implementation, by setting the time point of re-establishing the PDCP after that of receiving the gate close message, it is avoided that the PDCP re-establishment timing is earlier than the RLC re-establishment timing, resulting in data using old security information being processed with new security information, which results in decryption failure and data discarding.

In this exemplary implementation, the PCE may also be configured to validate the new security information for the re-established PDCP entity after receiving the gate open message of the MN or SN, where the MN or the SN may be configured to send the gate open message to the PCE after detecting an RRC connection reconfiguration completion message of the UE. In this exemplary implementation, by setting the time point of activating the new security information after that of receiving the gate open message, it is avoided that the PDCP re-establishment timing is earlier than the RLC re-establishment timing, resulting in data using old security information being processed with new security information, which results in decryption failure and data discarding.

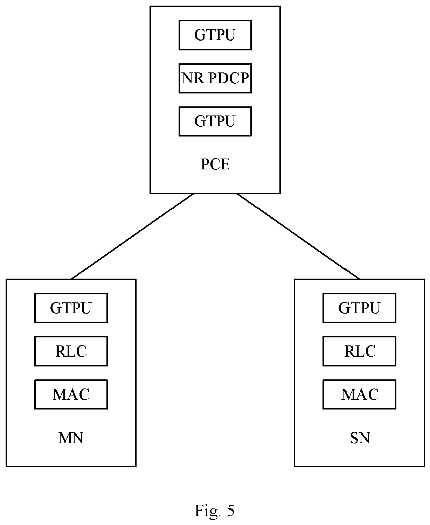

Fig. 5 is an example diagram of protocol hierarchy of an anchor point determination system provided by an embodiment of the present application. In Fig. 5, one PCE, one MN, and one SN are still taken as an example for illustration. The PCE is a third-party processing entity independent of the MN and SN, and an NR PDCP layer of an air interface protocol layer is deployed on the PCE. On the protocol architecture, the NR PDCP layer is responsible for the security processing (integrity protection and encryption) of signalling and service data of an Access Stratum (AS), and the NR PDCP layer is also a cache point of the signalling and service data on the base station side. Therefore, the PCE carrying the NR PDCP layer processing may be used as (including but not limited to) a security anchor point (i.e., PDCP anchor point) of a 4G or 5G bearer. Exemplarily, the security information used by the PDCP entity of the PCE may include an RRC integrity key K_{RRCint}, an RRC encryption key K_{RRCenc}, and a UP encryption key K_{UPenc}. These keys may be derived from the security key K_{eNB} on the LTE side or the security key S-K_{gNB} on the NR side.

As shown in Fig. 5, two GPRS Tunneling Protocol User Plane (GTPU) layers may also be deployed on the PCE. One of the GTPU layers is responsible for communication between the MN and the SN, and the other GTPU layer is responsible for interaction with the core network.

As shown in Fig. 5, due to the introduction of the PCE, the processing protocol layer of the LTE base station (i.e., MN) may not be provided with the NR PDCP layer, but the processing of the RLC layer and the MAC layer may be reserved. A GTPU layer may be further deployed on the LTE base station, which is responsible for communication with the PCE. The LTE base station may exchange data with the PCE through an F1-U port.

In an exemplary implementation, under the architecture shown in Fig. 5, after a 4G UE accesses an LTE base station (eNB), the LTE PDCP layer on the eNB may be selected as a security anchor point, and the bearer for the 4G UE does not need to use the PCE. When a 5G UE accesses the LTE base station, the NR PDCP layer of the PCE may be selected as the security anchor point, and the bearer for the 5G UE may be established on the PCE. The security key of the LTE base station is K_{eNB}, which is transmitted to the LTE base station by the core network.

In an exemplary implementation, the LTE base station may be responsible for completing the following security functions: selecting the integrity protection and encryption algorithm executed by the NR PDCP layer on the PCE; deriving the integrity protection and encryption keys executed by the NR PDCP layer on the PCE; determining the NR security capability of the 5G UE; and deriving and maintaining the security key S-K_{gNB} on the NR side of the 5G UE.

As shown in Fig. 5, due to the introduction of the PCE, like LTE base station, the processing protocol layer of the NR base station (i.e., the SN) may be deployed with no NR PDCP layer, but with an RLC layer and an MAC layer. A GTPU layer may be further deployed on the NR base station, which is responsible for communication with the PCE.

In an exemplary implementation, under the architecture shown in Fig. 5, after the 5G UE initially accesses from the LTE base station, when it is detected that the dual connectivity addition condition is met, a service bearer may be migrated to the NR base station by means of an SN addition process. The above process will involve security derivation change and the selection of a security key. The security key on the NR side is S-K_{gNB}, which may be derived from the security key K_{eNB} by the LTE base station and then transmitted to NR base station.

In an exemplary implementation, the NR base station may be responsible for completing the following security functions: selecting the security key used on the NR side; and deriving the integrity protection and encryption keys executed by the NR PDCP layer on the PCE.

In an exemplary implementation, in the security process of a UE initially accessing an LTE base station, the core network may carry the security key K_{eNB}, and an LTE security capability and an NR security capability of the UE in an initial UE context establishment request message and transmit them to the LTE base station (eNB). The initial UE context establishment request message may carry no NR security capability of the UE. If the initial UE context establishment request message carries no NR security capability of the UE, the eNB may create an NR security capability according to the LTE security capability of the UE. For example, for NR encryption algorithms, NEA0, 128-NEA1, 128-NEA2, 128-NEA3 may be set to be the same as EEA0, 128-EEA1, 128-EEA2, 128-EEA3; and for NR integrity protection algorithms, NIA0, 128-NIA1, 128-NIA2, 128-NIA3 may be set to be the same as EIA0, 128-EIA1, 128-EIA2, 128-EIA3. The remaining bits may be set to 0.

For a 4G UE, the PDCP anchor point may be selected on the LTE base station (eNB), that is, the security key K_{eNB} is used to derive an integrity protection key K_{RRCint} and an encryption key K_{RRCenc} to configure the security information of the PDCP. For SRB1 and SRB2 bearers for a 5G UE, the PDCP anchor point may be selected on the LTE base station, that is, the security key K_{eNB} is used to derive an integrity protection key K_{RRCint} and an encryption key K_{RRCenc} to configure the security information of the PDCP. For the data service of the 5G UE, the PDCP anchor point may be selected on the PCE, that is, the NR PDCP may be chosen to be used. The security key of LTE may be chosen to be used when the LTE side is initially established, that is, the security key K_{eNB} is used to derive the UP encryption key K_{UPenc} to configure the security information of the PDCP on the PCE. The eNB binds an SCG_Counter to the security key K_{eNB} selected when each 5G UE is initially established, and initially sets SCG_Counter = 0.

In an exemplary implementation, in the process of an LTE base station (MN) adding an SN (gNB) to the UE, the LTE base station may derive S-K_{gNB} from the security key K_{eNB} and SCG_Counter. In the SN addition process, an SN addition request message carrying the S-K_{gNB} and K_{eNB} is sent to the gNB. The SN (gNB) will select a security key according to whether the PCE for the SN is different from that for the MN (i.e. whether the SN selects the same PCE as the MN). The selection principle of the security key may consist in that when the MN and the SN share a PCE (that is, the MN and the SN select the same PCE for the UE), the SN may use K_{eNB} as the security key, and the SecurityConfig.keyToUse cell in the RRC connection reconfiguration message sent by the MN to the UE is used to select the security key K_{eNB}; and when the PCE for the SN is different from that for the MN (that is, the MN and the SN select different PCEs for the UE), the SN chooses to use S-K_{gNB} as the security key, and the SecurityConfig.keyToUse cell in the RRC connection reconfiguration message sent by the MN to the UE is used to select the security key S-K_{gNB}. In an embodiment, for SCG_Counter, the value of SCG_Counter may be increased by 1 every time subsequent dual connectivity is added.

In an exemplary implementation, when the MN (LTE base station) deletes the SN (NR base station) from the UE, the UE will return to the LTE side and uniformly use the security key of LTE. When the MN and the SN share a PCE (i.e., the MN and the SN select the same PCE for the UE), the PDCP anchor point may remain unchanged in the SN deletion process, and the LTE base station then may adopt a processing mode in which the security key remains unchanged. When the MN and the SN do not share the PCE, the PDCP anchor point will change in the SN deletion process, and there is a process of changing the security key from S-K_{gNB} to K_{eNB}.

In an exemplary implementation, the process of updating the security key may include the core network triggering the updating of the security key K_{eNB} and the updating of the security key requested by the SN side. When the core network triggers the updating of the security key K_{eNB}, the LTE base station (MN) may re-derive the S-K_{gNB} from the updated security key K_{eNB} and SCG_Counter, and trigger the updating of the security key on the SN side by means of an SN Modification process. When the PDCP Counter wrap around occurs, the SN will request the MN to trigger the updating of the security key. The MN may re-derive the S-K_{gNB} from the current security key K_{eNB} and SCG_Counter, and trigger the updating of the security key on the SN side by means of an SN Modification process. In the security key update process in the above two cases, the SN may derive the security information (e.g., including: RRC encryption key K_{RRCenc}, user plane encryption key K_{UPenc} and RRC integrity key K_{RRCint}) from the selected security key (K_{eNB} or S-K_{gNB}), and sends the derived security information to the PCE, so as to trigger the re-establishment of the PDCP and validate new security information. In the security key update process, the PCE does not trigger the re-establishment of the PDCP immediately after receiving the new security information, but triggers the re-establishment of the PDCP after receiving a gate close message sent by LTE base station or the NR base station, and stops sending downlink data and receiving uplink data at the same time. In this way, it is possible to avoid that the PDCP re-establishment timing is earlier than the RLC re-establishment timing, and the old data is processed with new security information, which results in decryption failure and data discarding. In addition, when detecting the RRC connection reconfiguration completion message of the UE, the LTE base station or the NR base station sends a gate open message to the PCE, and after receiving the gate open message, the PCE uses new security information in subsequent data transmission. In this way, in the process of the UE validating the new security information, the data processing is stopped to avoid the data discarding caused by the interleaving of the new and old security information.

In an embodiment, in the security processing process of this embodiment, the security algorithm used may be matched according to a security capability of the UE and an algorithm priority configured locally by the base station. The derivation algorithm of security information on the LTE side and on the NR side may comply with 3GPP TS 33401, which will not be described in detail here.

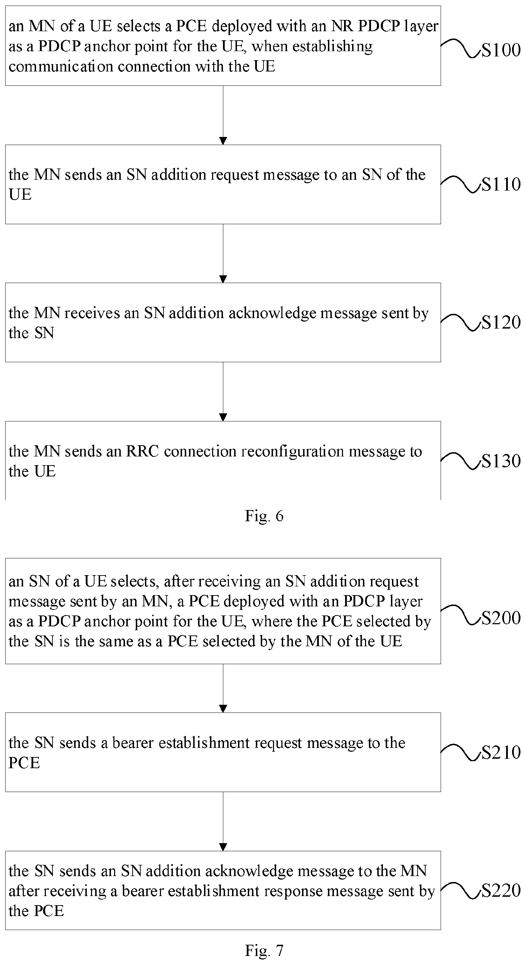

Fig. 6 is a flowchart of an anchor point determination method for supporting dual connectivity provided by an embodiment of the present application. The anchor point determination method provided by this embodiment may be applied to an LTE base station or an NR base station as an MN of a UE. As shown in Fig. 6, the anchor point determination method provided by this embodiment includes: S100 to S130.

At S100, an MN of a UE selects, in response to establishing communication connection with the UE, a PCE deployed with an NR PDCP layer as a PDCP anchor point for the UE.

At S110, the MN sends an SN addition request message to an SN of the UE, where the SN addition request message carries at least a security key of the MN, and information of the PCE (e.g., a PCE ID) selected by the MN for the UE.

At S120, the MN receives an SN addition acknowledge message sent by the SN, where the SN addition acknowledge message carries selection information of the security key of the MN, and the selection information is used to instruct a PCE selected by the SN for the UE to be the same as the PCE selected by the MN for the UE.

At S130, the MN sends an RRC connection reconfiguration message to the UE, where the RRC connection reconfiguration message carries the selection information of the security key of the MN.

If the MN is an LTE base station, the SN is an NR base station; or if the MN is an NR base station, the SN is an LTE base station. In this embodiment, the UE may be a 5G UE.

In an exemplary implementation, a PDCP entity created for a radio bearer of the UE in the NR PDCP layer of the PCE selected by the MN may use the security information (e.g., including an RRC integrity key K_{RRCint}, an RRC encryption key K_{RRCenc} and a user plane encryption key K_{UPenc}) derived from the security key of the MN, and after the SN of the UE selects the PCE as the PDCP anchor point for the UE, the security information used by the PDCP entity on the PCE remains unchanged. If the MN is an LTE base station, the security key of the MN is K_{eNB}.

In an exemplary implementation, the method of this embodiment may further include: the MN still retains the selected PCE as the PDCP anchor point and sends a bearer establishment request message to the PCE in response to the MN determining to delete the SN from the UE, where the bearer establishment request message is used to instruct the security information used by the PDCP entity on the PCE to remain unchanged; and the MN sends an RRC connection reconfiguration message to the UE after receiving a bearer establishment response message sent by the PCE, where the RRC connection reconfiguration message carries the selection information of the security key of the MN.

In an exemplary implementation, this embodiment may further include the following steps.

The MN sends an SN modification request message to the SN after receiving a new security key sent by a core network or an SN modification required message sent by the SN, where the SN modification request message carries the new security key.

The MN sends an RRC connection reconfiguration message to the UE and a gate close message to the PCE after receiving an SN modification acknowledge message sent by the SN, where the gate close message is used to instruct the PCE to suspend the sending and receiving of data of the UE to and from the MN and to instruct the PCE to trigger the re-establishment of a PDCP.

The MN sends a gate open message to the PCE after receiving an RRC connection reconfiguration completion message sent by the UE, where the gate open message is used to instruct the PCE to use new security information to start sending and receiving the data of the UE to and from the MN, and the new security information is derived by the SN from the new security key.

In an exemplary implementation, the MN of the UE is an LTE base station and the SN is an NR base station; and the RRC connection reconfiguration message sent by the MN to the UE carries a SecurityConfig.keyToUse cell, where the SecurityConfig.keyToUse cell is used to select a security key K_{eNB} of the LTE base station.

Fig. 7 is a flowchart of another anchor point determination method for supporting dual connectivity provided by an embodiment of the present application. The anchor point determination method provided by this embodiment may be applied to an LTE base station or an NR base station as an SN of a UE. As shown in Fig. 7, the anchor point determination method provided by this embodiment includes the following steps.

At S200, an SN of a UE selects, after receiving an SN addition request message sent by an MN, a PCE deployed with an NR PDCP layer as a PDCP anchor point for the UE, where the PCE selected by the SN is the same as a PCE selected by the MN of the UE.

At S210, the SN sends a bearer establishment request message to the PCE.

At S220, the SN sends an SN addition acknowledge message to the MN after receiving a bearer establishment response message sent by the PCE, where the SN addition acknowledge message carries selection information of a security key of the MN.

If the MN is an LTE base station, the SN is an NR base station; or if the MN is an NR base station, the SN is an LTE base station. In this embodiment, the UE may be a 5G UE.

In an exemplary implementation, a PDCP entity created for a radio bearer of the UE in the NR PDCP layer on the PCE selected by the SN and the MN uses the security information (e.g., including an RRC integrity key K_{RRCint}, an RRC encryption key K_{RRCenc} and a user plane encryption key K_{UPenc}) derived from the security key of the MN. If the MN is an LTE base station, the security key of the MN is K_{eNB}.

In an exemplary implementation, the method of this embodiment may further include: after receiving an SN modification request message sent by the MN, the SN derives new security information from a new security key carried in the SN modification request message, and sends a bearer establishment request message carrying the new security information to the PCE; after receiving a bearer establishment response message sent by the PCE, the SN sends an SN modification acknowledge message to the MN and an RRC connection reconfiguration message to the LTE; the SN sends a gate close message to the PCE, where the gate close message is used to instruct the PCE to suspend the sending and receiving of data of the UE to and from the SN and to instruct the PCE to trigger the re-establishment of a PDCP; and the SN sends a gate open message to the PCE after receiving an RRC connection reconfiguration completion message sent by the UE, where the gate open message is used to instruct the PCE to use the new security information to send and receive the data of the UE to and from the SN.

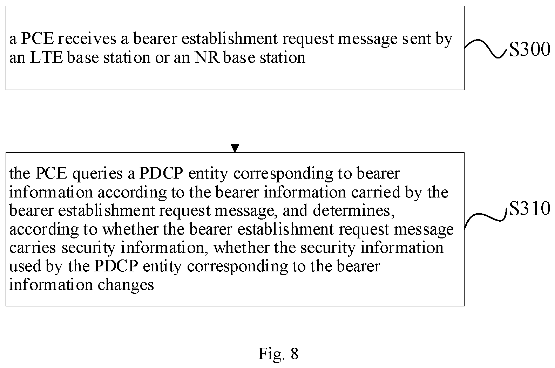

Fig. 8 is a flowchart of still another anchor point determination method for supporting dual connectivity provided by an embodiment of the present application. The anchor point determination method provided by this embodiment may be applied to a PCE deployed with an NR PDCP layer. As shown in Fig. 8, the anchor point determination method provided by this embodiment including:
- a step S300 of receiving, by the PCE, a bearer establishment request message sent by an LTE base station or an NR base station;
- a step S310 of querying, by the PCE according to bearer information carried by the bearer establishment request message, a PDCP entity corresponding to the bearer information, and determining, according to whether the bearer establishment request message carries security information, whether the security information used by the PDCP entity corresponding to the bearer information changes.

In an exemplary implementation, when MN selects a PCE as the PDCP anchor point for the UE and SN also selects the PCE as the PDCP anchor point for the UE, after receiving the bearer establishment request message sent by the SN, the PCE may query the corresponding PDCP entity according to the bearer information carried by the bearer establishment request message. The MN may be an LTE base station and the SN an NR base station, or the MN an NR base station and the SN an LTE base station.

In an exemplary implementation, after the MN and the SN select the same PCE as a PDCP anchor point for a UE, and the MN determines to delete the SN from the UE and still retains the selected PCE as the PDCP anchor point, after receiving the bearer establishment request message sent by the MN, the PCE may query the corresponding PDCP entity according to the bearer information carried by the bearer establishment request message. The MN may be an LTE base station and the SN an NR base station, or the MN an NR base station and the SN an LTE base station.

In an exemplary implementation, after the MN and the SN select the same PCE as a PDCP anchor point for a UE, when the core network triggers the updating of a security key or the SN triggers the updating of a security key, after receiving the bearer establishment request message sent by the SN, the PCE may query the corresponding PDCP entity according to the bearer information carried by the bearer establishment request message. The MN may be an LTE base station and the SN an NR base station, or the MN an NR base station and the SN an LTE base station.

In an exemplary implementation, in S310, the determining, according to whether the bearer establishment request message carries security information, whether the security information used by the PDCP entity corresponding to the bearer information changes may include: in a situation where the bearer establishment request message carries security information, the PCE determines that the security information used by the PDCP entity corresponding to the bearer information changes, and re-establishes the PDCP entity; and in a situation where the bearer establishment request message does not carries security information, the PCE determines that the security information used by the PDCP entity corresponding to the bearer information remains unchanged.

In an exemplary implementation, the anchor point determination method of this embodiment may further include, in a situation where the bearer establishment request message carries security information: after receiving a gate close message sent by the LTE base station or the NR base station, the PCE suspends the sending of downlink data and the receiving of uplink data, and triggers a PDCP re-establishment process; and after receiving a gate open message of the LTE base station or the NR base station, the PCE validates the security information carried by the bearer establishment request message ((i.e., validating new security information).) for the re-established PDCP entity, and starts sending the downlink data and receiving the uplink data.

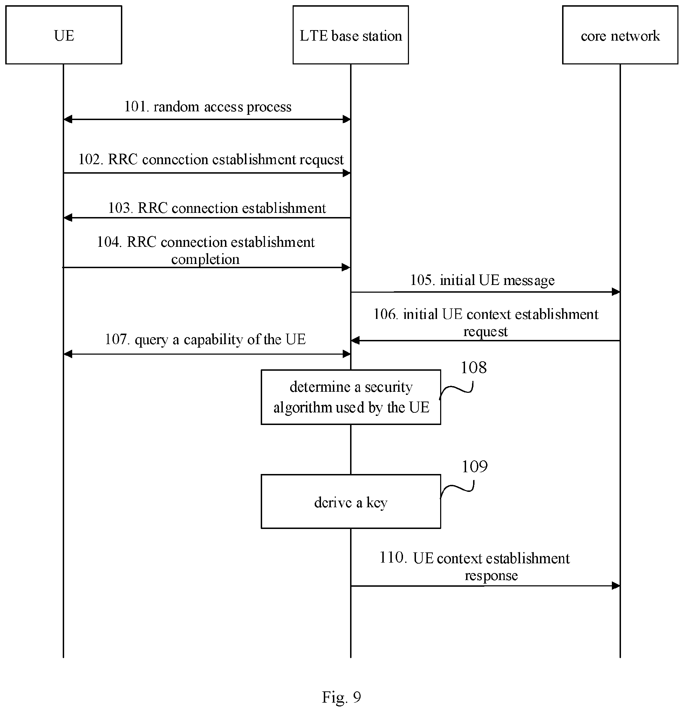

Fig. 9 is a schematic diagram of an exemplary implementation provided by an embodiment of the present application. This embodiment illustrates the security process of accessing the architecture shown in Fig. 5 by a 4G UE. As shown in Fig. 9, the security processing process of the accessing of the 4G UE includes the following steps.

At step 101, a UE initiates an RRC access request to an LTE base station, and enters an Msg3 procedure after successful random access.

At steps 102 and 103, after receiving an RRC connection establishment request message from the UE, the LTE base station selects an LTE PDCP entity as a security anchor point of an SRB 1, and sends an RRC connection establishment message to the UE.

At steps 104 and 105, after receiving an RRC connection establishment completion message from the UE, the LTE base station sends an initial UE message to a core network and waits for an initial UE context establishment request message sent by the core network.

At step 106, the LTE base station receives the initial UE context establishment request message sent by the core network. The initial UE context establishment request message may carry a security key K_{eNB} and an LTE security capability of the UE.

At step 107, the LTE base station sends a capability query request message to the UE so as to query a capability of the UE. In this example, after receiving a capability response message from the UE, the LTE base station confirms that the UE is a 4G UE.

At step 108, the LTE base station determines a security algorithm (e.g., a security algorithm with the highest matching priority) used by the UE according to the LTE security capability of the UE carried in the initial UE context establishment request message and a security algorithm priority configured locally. The LTE base station may send the determined security algorithm to the UE through a command Command.

At step 109, the LTE base station derives an RRC encryption key K_{RRCenc}, an RRC integrity protection key (referred to as integrity protection key) K_{RRCint} and a UP encryption key K_{UPenc} from the security algorithm, the security key K_{eNB} carried in the initial UE context establishment request message and a formula defined by a security protocol. The LTE base station may use the selected security algorithm and the derived key to configure security information of PDCP entities carried by the SRB1, an SRB2 and a DRB.

At step 110, the LTE base station replies a UE context establishment response message to the core network.

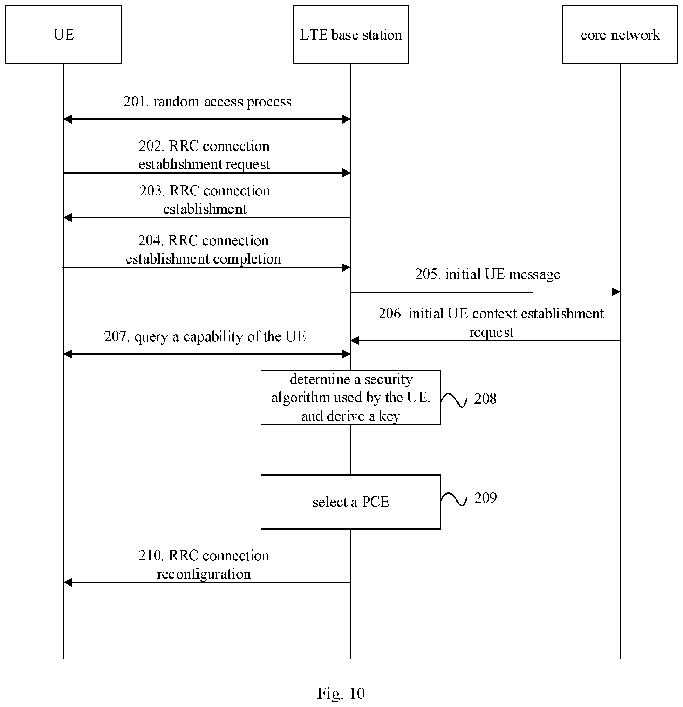

Fig. 10 is a schematic diagram of another exemplary implementation provided by an embodiment of the present application. This embodiment illustrates the security process of accessing the architecture shown in Fig. 5 by a 5G UE. The LTE base station may include an LTE control plane module and an LTE user plane module. As shown in Fig. 10, the security processing process of the accessing of the 5G UE includes the following steps.

At step 201, a UE initiates an RRC access request to an LTE base station, and enters an Msg3 procedure after successful random access.

At steps 202 and 203, after receiving an RRC connection establishment request message, the LTE control plane module of the LTE base station selects an LTE PDCP entity as a security anchor point of an SRB1, sends an RRC connection establishment message to the UE, and waits for an RRC connection establishment completion message from the UE.

At steps 204 and 205, after receiving the RRC connection establishment completion message from the UE, the LTE control plane module sends an initial UE message to a core network and waits for an initial UE context establishment request message sent by the core network.

At step 206, the LTE control plane module receives the initial UE context establishment request message sent by the core network. The initial UE context establishment request message may carry a security key K_{eNB}, and an LTE security capability and an NR security capability of the UE.

At step 207, the LTE control plane module sends a capability query request message to the UE so as to query a capability of the UE. In this example, after receiving a capability response message from the UE, the LTE control plane module confirms that the UE is a 5G UE.

At step 208, the LTE control plane module determines a security algorithm, and derives a key used by signalling and services.

In this step, the LTE control plane module may determine a security algorithm (e.g., a security algorithm with the highest matching priority) used by the UE according to the NR security capability of the UE carried in the initial UE context establishment request message and a security algorithm priority configured locally. The LTE base station may send the determined security algorithm to the UE through a command Command.

The LTE control plane module may further derive an RRC encryption key K_{RRCenc}, an RRC integrity protection key K_{RRCint} and a UP encryption key K_{UPenc} from the security algorithm, the security key K_{eNB} carried in the initial UE context establishment request message and a formula defined by a security protocol. The LTE base station may use the selected security algorithm and the derived RRC encryption key and RRC integrity protection key to configure security information of PDCP entities carried by the SRB 1 and an SRB2.

At step 209, the LTE control plane module may select a PCE as a security anchor point for the 5G UE, and use the selected security algorithm and the derived UP encryption key to configure security information of a PDCP entity on the PCE.

At step 210, the LTE control plane module sends an RRC connection reconfiguration message to the UE, where a SecurityConfig.keyToUse cell is used to select the security key K_{eNB}.

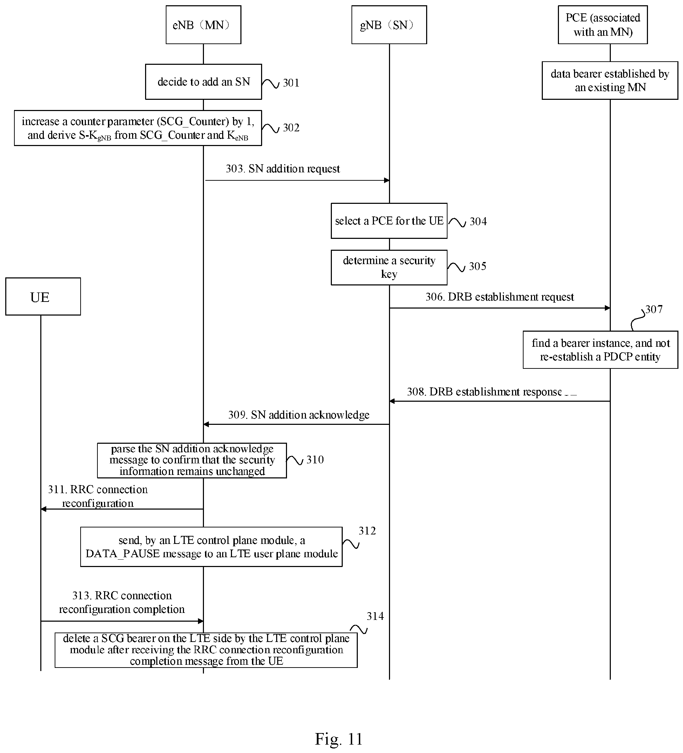

Fig. 11 is a schematic diagram of still another exemplary implementation provided by an embodiment of the present application. The UE in this embodiment is a 5G UE. In this embodiment, based on the architecture shown in Fig. 5, the LTE base station (eNB) is an MN of the UE, and the NR base station (gNB) is an SN of the UE. The UE has been functionally accessed to the LTE base station. The LTE base station receives the measurement results of the UE and decides to add dual connectivity. The LTE base station includes an LTE control plane module and an LTE user plane module.

As shown in Fig. 11, the security processing process of the addition of an SN in this embodiment may include the following steps.

At step 301, the MN decides to add an SN to the UE.

At step 302, when the MN triggers the addition of the SN, SCG_Counter = SCG_Counter + 1, and S-K_{gNB} is derived from a security key K_{eNB} and SCG_Counter.

In an embodiment, the initial SCG_Counter is 0, which has been set when a UE context is established. During first derivation, SCG_Counter = 0 is used for derivation, and during every subsequent derivation, SCG_Counter must be increased by 1.

At step 303, the MN sends an SN addition request message to the SN, where the SN addition request message may carry the security key S-K_{gNB}, an NR security capability of the UE, K_{eNB} and a PCE identifier (ID) associated with the MN.

At step 304, after receiving the SN addition request message, the SN selects a PCE for the UE.

In this example, the SN may select the same PCE as the MN for the UE according to the PCE identifier associated with the MN that is carried in the SN addition request message.

At step 305, the SN determines the security key used according to the selection of the PCE.

If the PCE selected by the SN for the UE and the PCE selected by the MN are not the same PCE, S-K_{gNB} is chosen to be used. If the PCE selected by the SN for the UE and the PCE selected by the MN are the same PCE, K_{eNB} is chosen to be used.

In this example, the PCE selected by the SN for the UE being the same as the PCE selected by the MN is taken as an example for illustration, that is, the security key currently selected by the SN is K_{eNB}.

In this step, if the SN chooses to use S-K_{gNB}, a security algorithm used by the UE is determined according to the NR security capability of the UE in the SN addition request message and a security algorithm priority configured locally, and by using a derivation function of NR, an encryption key (including an RRC encryption key and a UP encryption key) and an integrity protection key is derive from the selected security algorithm and the security key S-K_{gNB}. If the SN chooses to use K_{eNB}, there is no need to deduce security information (including an encryption key and an integrity protection key).

At step 306, the SN organizes a DRB establishment request message and sends the DRB establishment request message to the selected PCE.

When S-K_{gNB} is used as the security key, the DRB establishment request message sent by the SN to the PCE carries security information (e.g., including the selected security algorithm, an encryption key and an integrity protection key). When K_{eNB} is used as the security key, the DRB establishment request message may not carry security information.

In this example, the DRB establishment request message sent by the SN may carry a data bearer ID of the UE, without carrying security information.

At steps 307 and 308, after receiving the DRB establishment request message, the PCE searches for a bearer instance and replies a DRB establishment response message to the SN.

The PCE may search for the established bearer instance according to the data bearer ID carried in the DRB establishment request message. If the corresponding bearer instance cannot be found, a new bearer instance is established. If the corresponding bearer instance is found and the DRB establishment request message carries security information, the corresponding PDCP entity is re-established. If the corresponding bearer instance is found and the DRB establishment request message carries no security information, the corresponding PDCP entity does not need to be re-established.

In this example, since the DRB establishment request message carries no security information and the corresponding bearer instance can be found according to the data bearer ID, the corresponding PDCP entity does not need to be re-established.

At step 309, after receiving a DRB establishment response message, the SN replies an SN ADDITION ACKNOWLEDGE message to the MN (i.e., the LTE base station), where a SecurityConfig.keyToUse cell of "SeNB to MeNB Container" is used to select the security key K_{eNB}.

At step 310, after receiving the SN ADDITION ACKNOWLEDGE message, the LTE control plane module parses the SecurityConfig.keyToUse cell of "SeNB to MeNB Container" in the message. If K_{eNB} is obtained by parsing, it is considered that the security information used by the UE is not changed. If S-K_{gNB} is obtained by parsing, it is considered that the security information used by the UE is changed.

In this example, if the LTE control plane module obtains K_{eNB} by parsing, it is considered that the security information used by the UE is not changed.

At step 311, the LTE control plane module sends an RRC Connection Reconfiguration message to the UE, and transmits the SeNB to MeNB Container transmitted by the SN to the UE.

At step 312, the LTE control plane module sends a DATA_PAUSE request message to the LTE user plane module, to instruct not to change the security information. The LTE user plane module does not process the bearer with unchanged security information.

At step 313, after receiving the RRC connection reconfiguration message, the UE triggers the access of the UE on the NR side, that is, random access to gNB. At the same time, the UE replies an RRC connection reconfiguration completion message to the LTE base station.

At step 314, after receiving the RRC connection reconfiguration completion message from the UE, the LTE control plane module deletes the SCG bearer on the LTE side.

In this embodiment, the security information does not need to be changed in the SN addition process, thereby avoiding data interruption in the security information change process and improving the user's service experience.

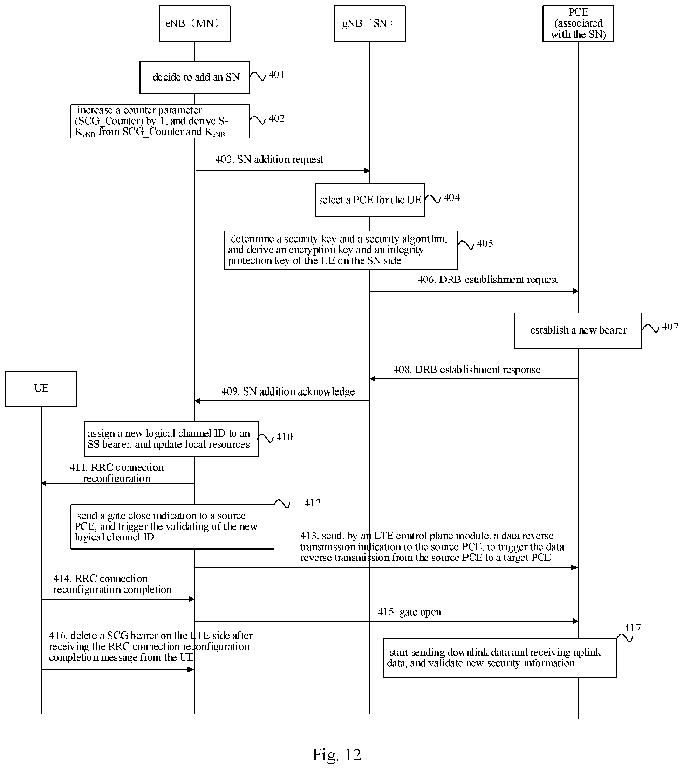

Fig. 12 is a schematic diagram of yet another exemplary implementation provided by an embodiment of the present application. The UE in this embodiment is a 5G UE. In this embodiment, based on the architecture shown in Fig. 5, the LTE base station is an MN of the UE, and the NR base station is an SN of the UE. The UE has been functionally accessed to the LTE base station. The LTE base station receives the measurement results of the UE and decides to add dual connectivity. The LTE base station includes an LTE control plane module and an LTE user plane module.

As shown in Fig. 12, the security processing process of the addition of an SN in this embodiment may include the following steps.

At step 401, the MN decides to add an SN.

At step 402, when the MN triggers the addition of the SN, SCG_Counter = SCG_Counter + 1, and S-K_{gNB} is derived from K_{eNB} and SCG_Counter.

In an embodiment, the initial SCG_Counter is 0, which has been set when a UE context is established. During first derivation, SCG_Counter = 0 is used for derivation, and during every subsequent derivation, SCG_Counter must be increased by 1.

At step 403, the MN sends an SN addition request message to the SN, where the SN addition request message may carry the security key S-K_{gNB}, an NR security capability of the UE, K_{eNB} and a PCE identifier (ID) associated with the MN.

At step 404, after receiving the SN addition request message, the SN selects a PCE for the UE.

In this example, the SN may select a PCE for the UE that is different from that on the MN side.

At step 405, according to the selection of the PCE, the SN determines the security key used and determines the security information (including the selected security algorithm, and the derived encryption key and integrity protection key).

If the PCE selected by the SN for the UE and the PCE selected by the MN are not the same PCE, S-K_{gNB} is chosen to be used. If the PCE selected by the SN for the UE and the PCE selected by the MN are the same PCE, K_{eNB} is chosen to be used.

In this example, the PCE selected by the SN for the UE and the PCE selected by the MN being not the same PCE is taken as an example for illustration, that is, the security key currently selected by the SN is S-K_{gNB}.

In this step, the security algorithm used by the UE is determined according to the NR security capability in the SN addition request message and a security algorithm priority configured locally. According to the selected security algorithm and the security key S-K_{gNB}, the encryption key and the integrity protection key are derived by using a derivation function of NR.

At step 406, the SN organizes a DRB establishment request message and sends the DRB establishment request message to the selected PCE.

The DRB establishment request message may carry security information, including the selected security algorithm and the derived key.

At steps 407 and 408, after receiving the DRB establishment request message, the PCE searches for a bearer instance and replies a DRB establishment response message to the SN.

If the PCE cannot find the corresponding bearer instance, a new bearer instance is established. If the corresponding bearer instance is found and the DRB establishment request message carries security information, the corresponding PDCP entity is re-established. If the corresponding bearer instance is found and the DRB establishment request message carries no security information, the PDCP entity does not need to be re-established.

In this example, the PCE may establish a new bearer instance according to the security configuration. A DRB establishment response message may carry the bearer ID of the newly established bearer ID.

At step 409, after receiving a DRB establishment response message, the SN replies an SN ADDITION ACKNOWLEDGE message to the MN (i.e., the LTE base station), where a SecurityConfig.keyToUse cell of "SeNB to MeNB Container" is used to select S-K_{gNB}.

At step 410, after receiving the SN ADDITION ACKNOWLEDGE message, the LTE control plane module parses the SecurityConfig.keyToUse cell of "SeNB to MeNB Container" in the message. If K_{eNB} is obtained by parsing, it is considered that the security information used by the UE is not changed. If S-K_{gNB} is obtained by parsing, it is considered that the security information used by the UE is changed.

In this embodiment, if the LTE control plane module obtains S-K_{gNB} by parsing, it is considered that the security information used by the UE is changed. The LTE control plane module allocates a new logical channel ID to an SS bearer when the security information is changed.

At step 411, the LTE control plane module sends an RRC connection reconfiguration message to the UE, where the SeNB to MeNB Container on the SN side is transmitted to the UE. Furthermore, sk-Counter-r15 is set to SCG_Counter. For the SS bearer, reestablishRLC-r15 is set to true; and a logicalChannelIdentity is filled in as the newly assigned logical channel ID.

At step 412, the LTE control plane module sends a DATA_PAUSE request message to the LTE user plane module, to instruct to change the security information. The LTE user plane module sends a gate close message to the source PCE (that is, the PCE selected by the MN) after receiving the DATA_PAUSE request message; and delivers the data upwards to re-established RLC after waiting for a period of time. The LTE user plane module replies a DATA_PAUSE response message to the LTE control plane module.

The source PCE stops sending downlink data and receiving uplink data after receiving the gate close message.

For the SS bearer, after receiving the DATA_PAUSE response message, the LTE control plane module sends a SWITCH IND message to the LTE user plane module to trigger the validating of a new logical channel ID.

At step 413, the LTE control plane module sends a data reverse transmission indication to the source PCE, to trigger the data reverse transmission from the source PCE to a target PCE (i.e., the PCE selected by the SN).

At step 414, after receiving an RRC connection reconfiguration message, the UE triggers the access of the UE on the NR side. At the same time, the UE replies an RRC connection reconfiguration completion message to the LTE base station.

At step 415, for the SS bearer, after recognizing an RRC connection reconfiguration completion message, the LTE user plane module sends a gate open message to the target PCE.

At step 416, after receiving the RRC connection reconfiguration completion message from the UE, the LTE control plane module deletes the SCG bearer on the LTE side.

At step 417, after receiving the gate open message, the target PCE starts sending downlink data and receiving uplink data, and validates new security information.

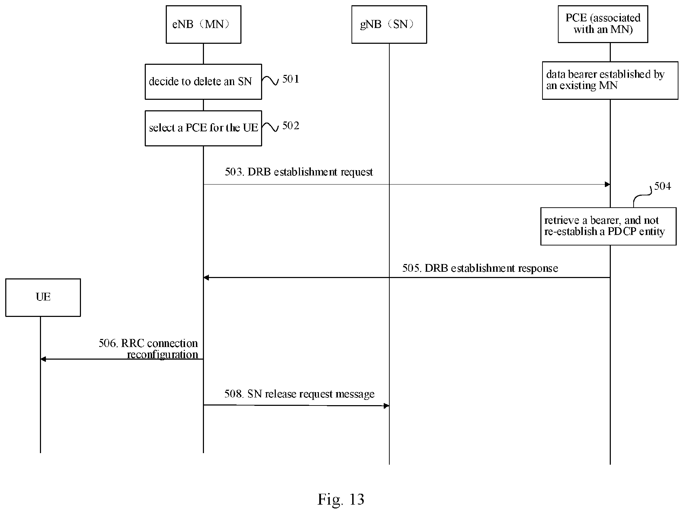

Fig. 13 is a schematic diagram of yet still exemplary implementation provided by an embodiment of the present application. The UE in this embodiment is a 5G UE. In this embodiment, based on the architecture shown in Fig. 5, the LTE base station is an MN of the UE, and the NR base station is an SN of the UE. Based on the embodiment shown in Fig. 11, the MN and the SN select the same PCE to establish dual connectivity for the UE. The LTE base station includes an LTE control plane module and an LTE user plane module.

As shown in Fig. 13, the security process of the deletion of an SN in this embodiment may include the following steps.

At step 501, after the addition of an SN is completed, the MN detects SCG Failure and triggers the deletion of the SN.

At step 502, the LTE control plane module re-accepts the UE and selects a PCE for the UE.

In this embodiment, the same PCE as the SN side may be selected.

When the MN and the SN share a PCE (that is, the MN and the SN select the same PCE for the UE), if the security key previously used by the SN is S-K_{gNB}, it is considered that the security information is changed, that is, the security information used by UE is changed. If the security key previously used by the SN is K_{eNB}, it is considered that the security information remains unchanged, that is, the security information used by UE remains unchanged.

In this embodiment, the deletion of the SN is performed based on the SN addition process shown in Fig. 11, where the security key used by the SN is K_{eNB}, and the security information remains unchanged.

At step 503, the LTE control plane module organizes a DRB establishment request message and sends the DRB establishment request message to the selected PCE, where the DRB establishment request message carries no security information.

At steps 504 and 505, after receiving the DRB establishment request message, the PCE searches for a bearer instance and replies a DRB establishment response message to the LTE control plane module.

The PCE may search for the established bearer instance according to the data bearer ID carried in the DRB establishment request message. If the corresponding bearer instance cannot be found, a new bearer instance is established. If the corresponding bearer instance is found and the DRB establishment request message carries security information, the corresponding PDCP entity is re-established. If the corresponding bearer instance is found and the DRB establishment request message carries no security information, the PDCP entity does not need to be re-established.

In this example, since the DRB establishment request message carries no security information and the corresponding bearer instance can be found according to the data bearer ID, the PDCP entity does not need to be re-established.

At step 506, after receiving the DRB establishment response message, the LTE control plane module sends an RRC connection reconfiguration message to the UE, where a SecurityConfig.keyToUse cell is used to select the security key K_{eNB}.

At step 507, the LTE control plane module sends a DATA_PAUSE message to the LTE user plane module, to instruct not to change the security information, so that the LTE user plane module does not perform processing.

At step 508, the LTE control plane module sends an SN release request message to the SN to trigger the release of the SN.

In this embodiment, the security information does not need to be changed in the SN deletion process, thereby avoiding data interruption in the security information change process and improving the user's service experience.

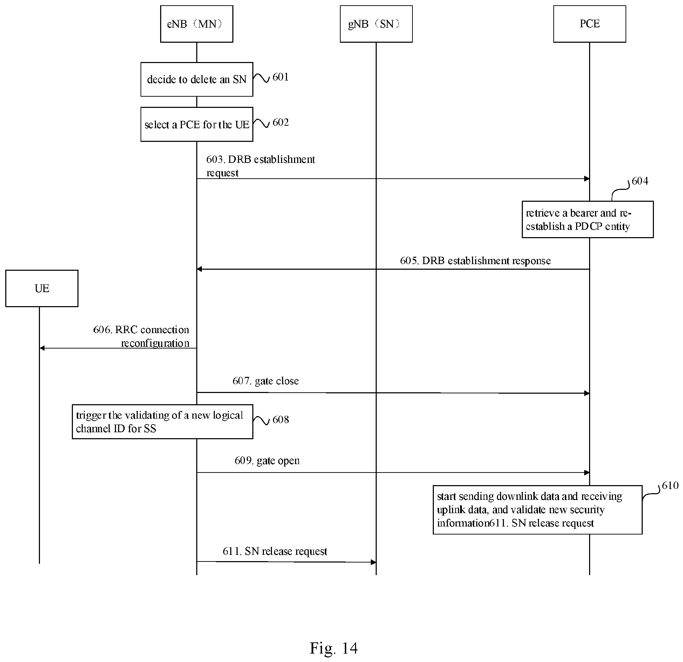

Fig. 14 is a schematic diagram of yet still exemplary implementation provided by an embodiment of the present application. The UE in this embodiment is a 5G UE. In this embodiment, based on the architecture shown in Fig. 5, the LTE base station is an MN of the UE, and the NR base station is an SN of the UE. Based on the embodiment shown in Fig. 12, the MN and the SN establish dual connectivity for the UE with different PCEs, that is, the MN and the SN select different PCEs for the UE. The LTE base station includes an LTE control plane module and an LTE user plane module.

As shown in Fig. 14, the security processing process of the deletion of an SN in this embodiment may include the following steps.

At step 601, after the addition of an SN is completed, the MN detects SCG Failure of the UE and triggers the deletion of the SN.

At step 602, the LTE control plane module re-accepts the UE and selects a PCE for the UE.

In this embodiment, the same PCE as the SN side may be selected.

When the MN and the SN share a PCE (that is, the MN and the SN select the same PCE for the UE), if the security key previously used by the SN is S-K_{gNB}, it is considered that the security information is changed. If the security key previously used by the SN is K_{eNB}, it is considered that the security information remains unchanged.

In this embodiment, the deletion of the SN is performed based on the SN addition process shown in Fig. 12, where the security key previously used by the SN is S-K_{gNB}, and the security information remains unchanged in the SN deletion process.

At step 603, the LTE control plane module organizes a DRB establishment request message and sends the DRB establishment request message to the PCE selected by the MN, where the DRB establishment request message carries security information (including the selected security algorithm, and an encryption key and an integrity protection key derived based on the security key K_{eNB} on the LTE side).

At steps 604 and 605, after receiving the DRB establishment request message, the PCE searches for a bearer instance and replies a DRB establishment response message to the LTE control plane module.

The PCE may search for the established bearer instance according to the data bearer ID carried in the DRB establishment request message. If the corresponding bearer instance cannot be found, a new bearer instance is established. If the corresponding bearer instance is found and the DRB establishment request message carries security information, the corresponding PDCP entity is re-established. If the corresponding bearer instance is found and the DRB establishment request message carries no security information, the PDCP entity is not re-established.

In this example, since the DRB establishment request message carries security information and the corresponding bearer instance can be found according to the data bearer ID, the corresponding PDCP entity may be re-established.

At step 606, after receiving the DRB establishment response message, the LTE control plane module sends an RRC connection reconfiguration message to the UE, where a SecurityConfig.keyToUse cell is used to select the security key K_{eNB}.

At step 607, the LTE control plane module sends a DATA_PAUSE request message to the LTE user plane module, to instruct to change the security information. The LTE user plane module sends a gate close message to the PCE after receiving the DATA_PAUSE request message; delivers the data upwards to re-established RLC after waiting for a period of time; and replies a DATA_PAUSE response message to the LTE control plane module. The PCE stops sending downlink data and receiving uplink data after receiving the gate close message.

At step 608, for the SS bearer, after receiving the DATA_PAUSE response message, the LTE control plane module sends a SWITCH IND message to the LTE user plane module and triggers the validating of a new logical channel ID.

At step 609, for the SS bearer, after recognizing an RRC connection reconfiguration completion message, the LTE user plane module sends a gate open message to the PCE.

At step 610, after receiving the gate open message, the PCE starts sending downlink data and receiving uplink data, and validates new security information.

At step 611, the LTE control plane module sends an SN release request message to the SN to trigger the release of the SN.

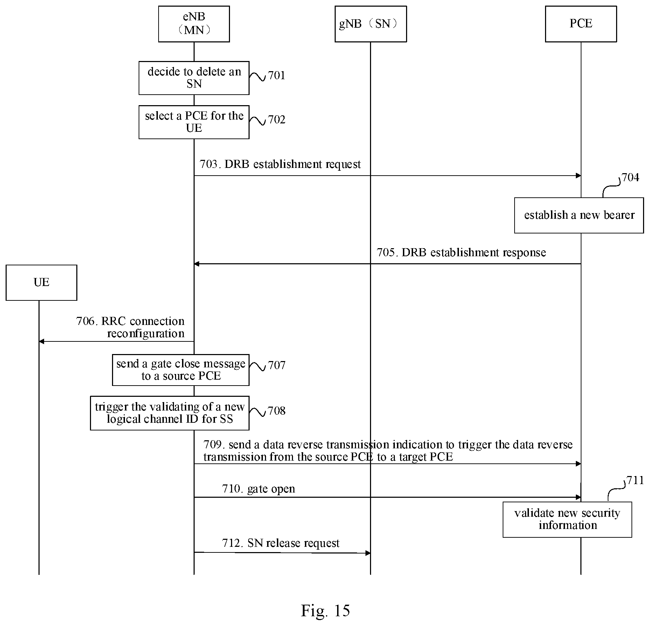

Fig. 15 is a schematic diagram of yet still exemplary implementation provided by an embodiment of the present application. The UE in this embodiment is a 5G UE. In this embodiment, based on the architecture shown in Fig. 5, the LTE base station is an MN of the UE, and the NR base station is an SN of the UE. Based on the embodiment shown in Fig. 11, the MN and the SN select the same PCE to establish dual connectivity for the UE. The LTE base station includes an LTE control plane module and an LTE user plane module.

As shown in Fig. 15, the security processing process of the deletion of an SN in this embodiment may include the following steps.

At step 701, after the addition of an SN is completed, the MN detects SCG Failure and triggers the deletion of the SN.

At step 702, the LTE control plane module re-accepts the UE and selects a PCE for the UE.

In this embodiment, a PCE that is different from the SN side may be selected (i.e., the PCE selected by the MN is different from the PCE selected by the SN), and it is considered that the security information used by the UE is changed.

At step 703, the LTE control plane module organizes a DRB establishment request message and sends the DRB establishment request message to the PCE selected by the MN, where the DRB establishment request message carries security information (including the selected security algorithm, and an encryption key and an integrity protection key derived based on the security key K_{eNB} on the LTE side).

At steps 704 and 705, after receiving the DRB establishment request message, the PCE searches for a bearer instance and replies a DRB establishment response message to the LTE control plane module.

The PCE may search for the established bearer instance according to the data bearer ID carried in the DRB establishment request message. If the corresponding bearer instance cannot be found, a new bearer instance is established. If the corresponding bearer instance is found and the DRB establishment request message carries security information, the corresponding PDCP entity is re-established. If the corresponding bearer instance is found and the DRB establishment request message carries no security information, the PDCP entity is not re-established.

In this example, since the PCE cannot find the corresponding bearer instance, a new bearer instance is established.

At step 706, after receiving the DRB establishment response message, the LTE control plane module sends an RRC connection reconfiguration message to the UE, where a SecurityConfig.keyToUse cell is used to select the security key K_{eNB}.

At step 707, the LTE control plane module sends a DATA_PAUSE request message to the LTE user plane module, to instruct to change the security information. The LTE user plane module sends a gate close message to the source PCE (that is, the PCE selected by the SN) after receiving the DATA_PAUSE request message; delivers the data upwards to re-established RLC after waiting for a period of time; and replies a DATA_PAUSE response message to the LTE control plane module. The source PCE stops sending downlink data and receiving uplink data after receiving the gate close message.

At step 708, for the SS bearer, after receiving the DATA_PAUSE response message, the LTE control plane module sends a SWITCH IND message to the LTE user plane module and triggers the validating of a new logical channel ID.

At step 709, the LTE control plane module sends a data reverse transmission indication to the source PCE, to trigger the data reverse transmission from the source PCE to a target PCE (i.e., the PCE selected by the MN).

At step 710, for the SS bearer, after recognizing an RRC connection reconfiguration completion message, the LTE user plane module sends a gate open message to the target PCE.

At step 711, after receiving the gate open message, the target PCE starts sending downlink data and receiving uplink data, and validates new security information.

At step 712, the LTE control plane module sends an SN release request message to the SN side to trigger the release of the SN.

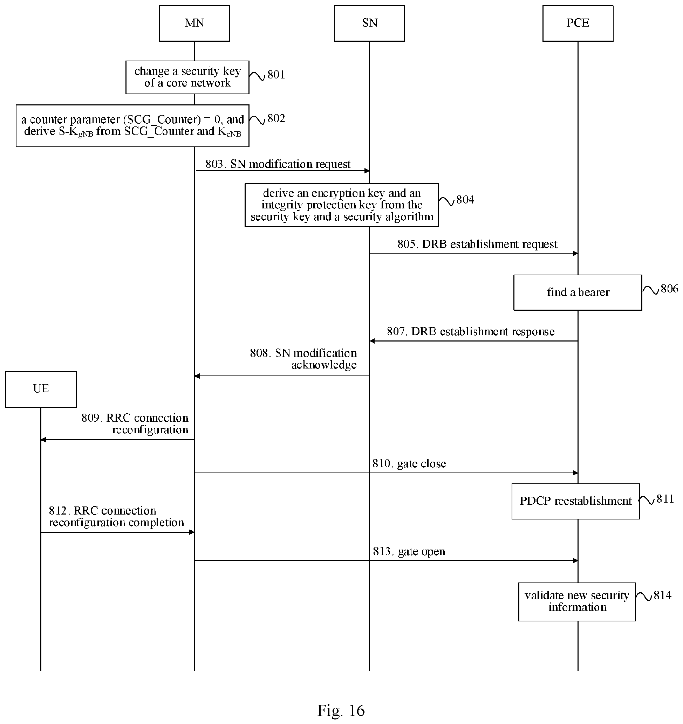

Fig. 16 is a schematic diagram of yet still exemplary implementation provided by an embodiment of the present application. The UE in this embodiment is a 5G UE. In this embodiment, based on the architecture shown in Fig. 5, the LTE base station may be an MN of the UE, and the NR base station is an SN of the UE. Based on the embodiment shown in Fig. 11, the MN and the SN establish dual connectivity with the same PCE, that is, the MN and the SN select the same PCE as a PDCP anchor point for the UE. The LTE base station includes an LTE control plane module and an LTE user plane module.

As shown in Fig. 16, a security information change process in this embodiment may include the following steps.

At step 801, the MN receives a UE context modification request message sent by a core network, where the UE context modification request message carries a new security key K_{eNB}, and starts to trigger a security information update process.

At step 802, the LTE control plane module sets SCG _ counter = 0; and derives new S-K_{gNB} from SCG_Counter and new K_{eNB}.

At step 803, the MN sends an SN modification request message to the SN, where the SN modification request message may carry S-K_{gNB} and K_{eNB}.

At steps 804 and 805, after receiving the SN modification request message, the SN derives an encryption key and an integrity protection key from the security key and a security algorithm, and organizes and sends a DRB establishment request message, where the DRB establishment request message carries security information (including the security algorithm and the derived keys).

If the security key currently used by the PCE is S-K_{gNB}, a new encryption key and integrity protection key are derived from the new S-K_{gNB} and the currently used security algorithm. If the security key currently used by the PCE is K_{eNB}, a new encryption key and integrity protection key are derived from the new K_{eNB} and the currently used security algorithm.

At steps 806 and 807, after receiving the DRB establishment request message, the PCE searches for a bearer instance and replies a DRB establishment response message to the SN.

The PCE may search for the established bearer instance according to the data bearer ID carried in the DRB establishment request message. If the corresponding bearer instance cannot be found, a new bearer instance is established. If the corresponding bearer instance is found and the DRB establishment request message carries security information, the corresponding PDCP entity is re-established. If the corresponding bearer instance is found and the DRB establishment request message carries no security information, the PDCP entity is not re-established.

In this embodiment, since the DRB establishment request message carries security information and the corresponding bearer instance can be found according to the data bearer ID, the corresponding PDCP entity is re-established.

At step 808, after receiving the DRB establishment response message, the SN replies an SN modification acknowledge message to the MN, where the SN modification acknowledge message instructs to perform re-establishment on the PDCP carried by the UE and perform intra-cell handover.

At step 809, after receiving the SN modification acknowledge message, the MN sends an RRC connection reconfiguration message to the UE.

If the SN uses the security key K_{eNB}, the UE may be instructed to perform intra-cell handover. If the SN uses the security key S-K_{gNB}, sk-Counter-r15 may be set to SCG_Counter. For the SS bearer, reestablishRLC-r15 may be set to true; and the LTE is instructed to perform intra-cell handover at the same time.

At step 810, the LTE control plane module sends a DATA_PAUSE request message to the LTE user plane module, to instruct to change the security information. The LTE user plane module sends a gate close message to the PCE after receiving the DATA_PAUSE request message; delivers the data upwards to re-established RLC after waiting for a period of time; and replies a DATA_PAUSE response message to the LTE control plane module.

At step 811, the PCE stops sending downlink data and receiving uplink data after receiving the gate close; and triggers the re-establishment of the PDCP.

At steps 812 and 813, for the SS bearer, after recognizing an RRC connection reconfiguration completion message sent by the UE, the LTE user plane module sends a gate open message to the PCE.

At step 814, after receiving the gate open message, the PCE starts sending downlink data and receiving uplink data, and validates new security information.

In an embodiment, the processing process of an NR side user plane module may refer to the processing of the LTE user plane module, which will not be described in detail here.

In this embodiment, in a security information update process triggered by the MN, the time point of re-establishing the PDCP is set after that of receiving the gate close message, and the time point of activating the new security information is set after that of receiving the gate open message, so that it is avoided that the PDCP re-establishment timing is earlier than the RLC re-establishment timing, and the old data is processed with new security information, which results in decryption failure and data discarding.

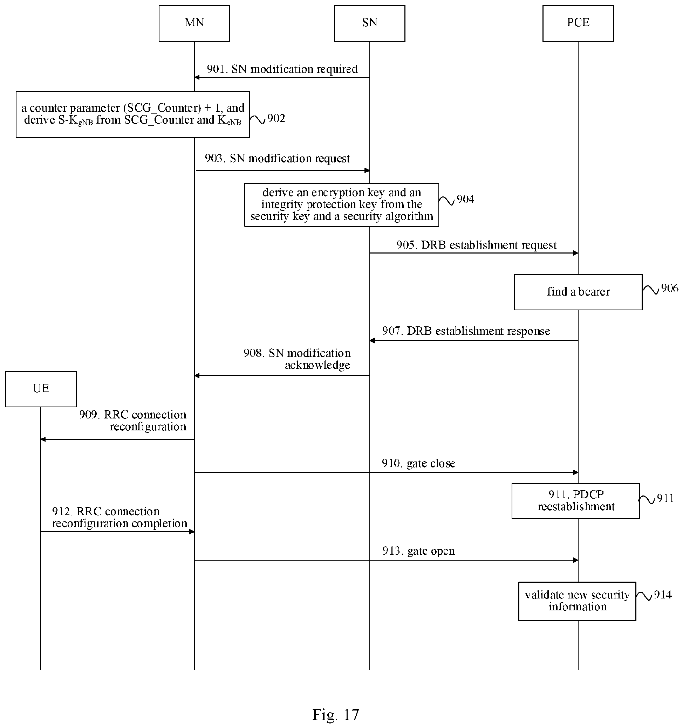

Fig. 17 is a schematic diagram of yet still exemplary implementation provided by an embodiment of the present application. The UE in this embodiment is a 5G UE. In this embodiment, based on the architecture shown in Fig. 5, the LTE base station may be an MN of the UE, and the NR base station is an SN of the UE. Based on the embodiment shown in Fig. 11, the MN and the SN establish dual connectivity with the same PCE, that is, the MN and the SN select the same PCE as a PDCP anchor point for the UE. The LTE base station includes an LTE control plane module and an LTE user plane module.

As shown in Fig. 17, a security information change process in this embodiment may include the following steps.

At step 901, the SN sends an SN modification required message to the MN in response to detecting the PDCP Counter wrap around, where the SN modification required message instructs a request for an update to the security key.

At step 902, after receiving the request, the MN side updates K_{eNB} if the security key currently used by the SN is K_{eNB}. The implementation procedure may refer to the embodiment shown in Fig. 16. If the security key currently used by the SN is S-K_{gNB}, the processing may be performed in the following manner as described in this embodiment.

In this embodiment, the LTE control plane module sets SCG_Counter = SCG_Counter + 1; and derives new S-K_{gNB} from SCG_Counter and K_{eNB}.

At step 903, the MN sends an SN modification request message to the SN, where the SN modification request message carries a new S-K_{gNB}.

At steps 904 and 905, after receiving the SN modification request message, the SN derives an encryption key and an integrity protection key from the security key and a security algorithm, and organizes and sends a DRB establishment request message, where the DRB establishment request message carries security information (including the security algorithm and the derived encryption key and integrity protection key).

In this embodiment, a new encryption key and integrity protection key are derived from the new S-K_{gNB} and the currently used security algorithm, and a DRB establishment request message is organized, where the DRB establishment request message carries new security information.

At steps 906 and 907, after receiving the DRB establishment request message, the PCE searches for a bearer instance and replies a DRB establishment response message to the SN.

The PCE may search for the established bearer instance according to the data bearer ID carried in the DRB establishment request message. If the corresponding bearer instance cannot be found, a new bearer instance is established. If the corresponding bearer instance is found and the DRB establishment request message carries security information, the corresponding PDCP entity is re-established. If the corresponding bearer instance is found and the DRB establishment request message carries no security information, the PDCP entity does not need to be re-established.

In this embodiment, since the DRB establishment request message carries security information and the corresponding bearer instance can be found according to the data bearer ID, the corresponding PDCP entity is re-established.

At step 908, after receiving the DRB establishment response message, the SN replies an SN modification acknowledge message to the MN, where the SN modification acknowledge message instructs to perform re-establishment on the PDCP carried by the UE and perform intra-cell handover.

At step 909, after receiving the SN modification acknowledge message, the MN side allocates a new logical channel ID for the SS bearer and sends an RRC connection reconfiguration message to the UE, where sk-Counter-r15 may be set to SCG_Counter. For the SS bearer, reestablishRLC-r15 may be set to true; and a logicalChannelIdentity is filled in as the newly assigned logical channel ID.

At step 910, the LTE control plane module sends a DATA_PAUSE request message to the user plane module, to instruct to change the security information. The LTE user plane module sends a gate close message to the PCE after receiving the DATA_PAUSE request message; delivers the data upwards to re-established RLC after waiting for a period of time; and replies a DATA_PAUSE response message to the LTE control plane module.

At step 911, the PCE stops sending downlink data and receiving uplink data after receiving the gate close, and triggers the re-establishment of the PDCP.

At steps 912 and 913, for the SS bearer, after recognizing an RRC connection reconfiguration completion message sent by the UE, the LTE user plane module sends a gate open message to the PCE.

At step 914, after receiving the gate open message, the PCE starts sending downlink data and receiving uplink data, and validates new security information.

In an embodiment, the processing process of an NR side user plane module may refer to the processing of the LTE user plane module, which will not be described in detail here.

In this embodiment, in a security information update process triggered by the SN, the time point of re-establishing the PDCP is set after that of receiving the gate close message, and the time point of activating the new security information is set after that of receiving the gate open message, so that it is avoided that the PDCP re-establishment timing is earlier than the RLC re-establishment timing, and the old data is processed with new security information, which results in decryption failure and data discarding.

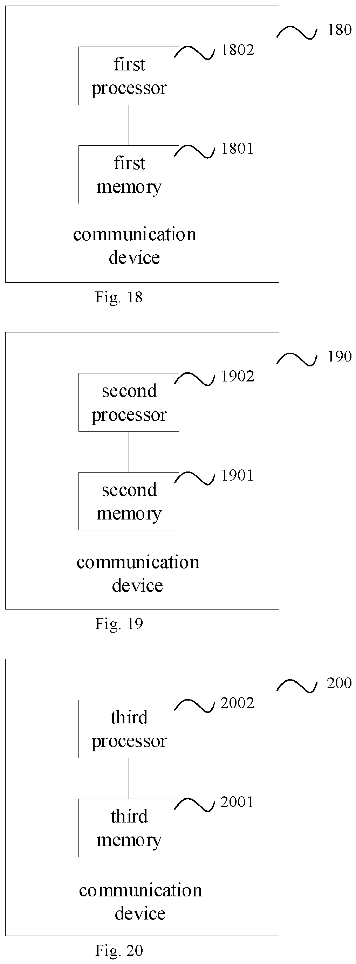

Fig. 18 is a schematic diagram of a communication device provided by an embodiment of the present application. As shown in Fig. 18, the communication device 180, such as an LTE base station or an NR base station, provided by this embodiment includes: a first memory 1801 and a first processor 1802, where the first memory 1801 is adapted to store an anchor point determination program for supporting dual connectivity which, when executed by the first processor 1802, causes the processor to perform the method as shown in Fig. 6.

In an embodiment, the structure of the communication device 180 shown in Fig. 18 does not constitute a limitation of the communication device, and may include more or fewer components than shown in the figure, or combine some of the components, or provide different component arrangements.

The first processor 1802 may include a processing apparatus such as a Microcontroller Unit (MCU) or a Field Programmable Gate Array (FPGA). The first memory 1801 may be configured to store software programs and modules of application software, such as program instructions or modules corresponding to the anchor point determination method in this embodiment. The first processor 1802 runs the software programs and modules stored in the first memory 1801 for executing various functional applications and data processing, such as performing the anchor point determination method provided by this embodiment. The first memory 1801 may include a highspeed random access memory, and may also include a non-volatile memory, such as one or more magnetic storage apparatuses, a flash memory, or other non-volatile solid-state memories. In some examples, the first memory 1801 may include memories remotely located with respect to the first processor 1802, and these remote memories may be connected to the UE through a network. Examples of the above network include the Internet, an intranet, a local area network, a mobile communication network, and a combination thereof.

Fig. 19 is a schematic diagram of another communication device provided by an embodiment of the present application. As shown in Fig. 19, the communication device 190, such as an LTE base station or an NR base station, provided by this embodiment includes: a second memory 1901 and a second processor 1902, where the second memory 1901 is configured to store an anchor point determination program for supporting dual connectivity which, when executed by the second processor 1902, causes the processor to perform the method as shown in Fig. 7.

The related descriptions of the second memory 1901 and the second processor 1902 may refer to the above descriptions of the first memory 1801 and the first processor 1802, which will not repeated here.

Fig. 20 is a schematic diagram of still another communication device provided by an embodiment of the present application. As shown in Fig. 20, the communication device 200, such as a PCE, provided by this embodiment includes: a third memory 2001 and a third processor 2002, where the third memory 2001 is adapted to store an anchor point determination program for supporting dual connectivity which, when executed by the third processor 2002, causes the processor to perform the method as shown in Fig. 8.

The related descriptions of the third memory 2001 and the third processor 2002 may refer to the above descriptions of the first memory 1801 and the first processor 1802, which will not repeated here.

In addition, an embodiment of the present application further provides a computer-readable medium storing an anchor point determination program for supporting dual connectivity which, when executed by a processor, causes the processor to perform the method described above, such as the method shown in Fig. 6, 7 or 8.

All or some of the steps of the methods, systems and functional modules/units in the apparatuses disclosed above may be implemented as software, firmware, hardware and appropriate combinations thereof. In the hardware implementation, the division between functional modules/units mentioned in the above description does not necessarily correspond to the division of physical components. For example, a physical component may have multiple functions, or a function or step may be cooperatively performed by multiple physical components. Some or all of the components may be implemented as software executed by a processor, such as a digital signal processor or a microprocessor, or as hardware, or as an integrated circuit, such as an application specific integrated circuit. Such software can be distributed on computer-readable media, which can include computer storage media (or non-transitory media) and communication media (or transitory media). the term computer-readable storage medium includes volatile and nonvolatile, removable and non-removable media implemented in various methods or technologies for storing information, such as computer readable instructions, data structures, program modules or other data. Computer storage media include Random Access Memory (RAM), Read-Only Memory (ROM), Electrically Erasable Programmable Read-Only Memory (EEPROM), flash memory or other memory technologies, portable Compact Disc Read-Only Memory (CD-ROM), Digital Video Disk (DVD) or other optical disk storage, magnetic boxes, magnetic tapes, magnetic disk storage or other magnetic storage apparatuses, or other media that can be used to store desired information and can be accessed by computers. Communication media typically contain computer readable instructions, data structures, program modules or other data in a modulated data signal such as a carrier wave or other transmission mechanism, and can include various information delivery media.

## Claims

1. An anchor point determination system for supporting dual connectivity, comprising: a Packet Co-operate Engine, PCE, a Master Node, MN, and a Secondary Node, SN, **characterized in that**, the PCE comprises: a memory (2001) and a processor (2002), where the memory (2001) is adapted to store an anchor point determination program for supporting dual connectivity which, when executed by the processor (2002), causes the PCE to:
receive a bearer establishment request message sent by a Long Term Evolution, LTE, base station or a New Radio, NR, base station; and
query a Packet Data Convergence Protocol, PDCP, entity corresponding to bearer information according to bearer information carried by the bearer establishment request message, and determining, according to whether the bearer establishment request message carries security information, whether the security information used by the PDCP entity corresponding to the bearer information changes;
wherein:
the MN and the SN are respectively connected to the PCE; an NR PDCP layer is deployed on the PCE; and
the MN and the SN are respectively configured to select the same PCE as a PDCP anchor point for a User Equipment, UE, in response to the UE establishing dual connectivity with an LTE base station and an NR base station, wherein the LTE base station is the MN and the NR base station is the SN, or the NR base station is the MN and the LTE base station is the SN; and
wherein a PDCP entity created for a radio bearer of the UE in the NR PDCP layer on the PCE is configured to use security information, which is derived from a security key of the MN, after the MN selects a PCE as the PDCP anchor point for the UE; and the PDCP entity is further configured to use the security information that remains unchanged after the SN selects the PCE as the PDCP anchor point for the UE.

2. The system of claim 1, wherein the MN is configured to still retain the selected PCE as the PDCP anchor point in response to determining to delete the SN, and the security information used by the PDCP entity on the PCE remains unchanged.

3. The system of claim 1, wherein the PCE selected by the MN and the SN for the UE is configured to receive new security information from the SN in response to the MN triggering the updating of a security key or the SN triggering the updating of a security key, wherein the new security information is derived from a new security key; and
the PCE is further configured to suspend the sending of downlink data and the receiving of uplink data after receiving a gate close message of the MN or the SN, and to trigger the re-establishment of a PDCP.

4. The system of claim 3, wherein the PCE is further configured to validate the new security information for the re-established PDCP entity after receiving a gate open message of the MN or the SN, wherein the MN or the SN is configured to send the gate open message to the PCE after detecting a Radio Resource Control, RRC, connection reconfiguration completion message of the UE.

5. The system of claim 1, wherein the LTE base station is the MN of the UE and the NR base station is the SN of the LTE; and the MN of the LTE is configured to send an SN addition request message to the SN and to send an RRC connection reconfiguration message to the UE after receiving an SN addition acknowledge message sent by the SN, wherein a security key selection SecurityConfig.keyToUse cell carried by the RRC connection reconfiguration message is used to select a security key K_{eNB} of the LTE base station.

6. An anchor point determination method for supporting dual connectivity, comprising:
selecting, by a Master Node, MN, of a User Equipment, UE, in response to establishing communication connection with the UE, a Packet Co-operate Engine, PCE, deployed with a New Radio, NR, Packet Data Convergence Protocol, PDCP, layer as a PDCP anchor point for the UE (S100) , **characterized in that**, the PCE comprises: a memory (2001) and a processor (2002), where the memory (2001) is adapted to store an anchor point determination program for supporting dual connectivity which, when executed by the processor (2002), causes the PCE to:
receive a bearer establishment request message sent by a Long Term Evolution, LTE, base station or an NR base station; and
query a PDCP entity corresponding to bearer information according to bearer information carried by the bearer establishment request message, and determining, according to whether the bearer establishment request message carries security information, whether the security information used by the PDCP entity corresponding to the bearer information changes;
sending, by the MN, an SN addition request message to a Secondary Node, SN, of the UE, wherein the SN addition request message carries at least a security key of the MN, and information of the PCE selected by the MN for the UE (S110);
receiving, by the MN, an SN addition acknowledge message sent by the SN, wherein the SN addition acknowledge message carries selection information of the security key of the MN, and the selection information is used to instruct a PCE selected by the SN for the UE to be the same as the PCE selected by the MN for the UE (S120);
sending, by the MN, a Radio Resource Control, RRC, connection reconfiguration message to the UE, wherein the RRC connection reconfiguration message carries the selection information of the security key of the MN (S130);
wherein the MN is a Long Term Evolution, LTE, base station, and the SN is an NR base station; or the MN is an NR base station and the SN is an LTE base station; and
wherein a PDCP entity created for a radio bearer of the UE in the NR PDCP layer of the PCE selected by the MN uses security information derived from the security key of the MN, and the security information used by the PDCP entity on the PCE remains unchanged after the SN of the UE selects the PCE as the PDCP anchor point for the UE.

7. The method of claim 6, further comprising:
still retaining the selected PCE as the PDCP anchor point and sending a bearer establishment request message to the PCE by the MN in response to the MN determining to delete the SN from the UE, wherein the bearer establishment request message is used to instruct the security information used by the PDCP entity on the PCE to remain unchanged; and
sending an RRC connection reconfiguration message to the UE by the MN after receiving a bearer establishment response message sent by the PCE, wherein the RRC connection reconfiguration message carries the selection information of the security key of the MN.

8. The method of claim 6, further comprising:
sending an SN modification request message to the SN by the MN after receiving a new security key sent by a core network or an SN modification required message sent by the SN, wherein the SN modification request message carries the new security key;
sending an RRC connection reconfiguration message to the UE and a gate close message to the PCE by the MN after receiving an SN modification acknowledge message sent by the SN, wherein the gate close message is used to instruct the PCE to suspend the sending and receiving of data of the UE to and from the MN and to instruct the PCE to trigger the re-establishment of a PDCP; and
sending a gate open message to the PCE by the MN after receiving an RRC connection reconfiguration completion message sent by the UE, wherein the gate open message is used to instruct the PCE to use new security information to send and receive the data of the UE to and from the MN, and the new security information is derived by the SN from the new security key.

9. The method of any one of claims 6 to 8, wherein the MN of the UE is an LTE base station and the SN of the LTE is an NR base station; and
the RRC connection reconfiguration message sent by the MN to the UE carries a SecurityConfig.keyToUse cell, wherein the security key selection SecurityConfig.keyToUse cell is used to select a security key K_{eNB} of the LTE base station.

10. An anchor point determination method for supporting dual connectivity, comprising:
selecting, by a Secondary Node, SN, of a User Equipment, UE, after receiving an SN addition request message sent by a Master Node, MN, a Packet Co-operate Engine, PCE, deployed with a New Radio, NR, Packet Data Convergence Protocol, PDCP, layer as a PDCP anchor point for the UE, **characterized in that**, the PCE comprises: a memory (2001) and a processor (2002), where the memory (2001) is adapted to store an anchor point determination program for supporting dual connectivity which, when executed by the processor (2002), causes the PCE to:
receive a bearer establishment request message sent by a Long Term Evolution, LTE, base station or an NR base station; and
query a PDCP entity corresponding to bearer information according to bearer information carried by the bearer establishment request message, and determining, according to whether the bearer establishment request message carries security information, whether the security information used by the PDCP entity corresponding to the bearer information changes;
wherein the PCE selected by the SN is the same as a PCE selected by the MN for the UE (S200);
sending, by the SN, a bearer establishment request message to the PCE (S210);
sending, by the SN, an SN addition acknowledge message to the MN after receiving a bearer establishment response message sent by the PCE, wherein the SN addition acknowledge message carries selection information of a security key of the MN (S220);
wherein the MN is a Long Term Evolution (LTE) base station, and the SN is an NR base station; or the MN is an NR base station and the SN is an LTE base station; and
wherein a PDCP entity created for a radio bearer of a User Equipment, UE, in the NR PDCP layer of the PCE selected by the SN and the MN uses security information derived from the security key of the MN, and the security information used by the PDCP entity on the PCE remains unchanged after the SN of the UE selects the PCE as the PDCP anchor point for the UE.

11. The method of claim 10, wherein a PDCP entity created for a radio bearer of the UE in the NR PDCP layer of the PCE selected by the SN and the MN uses security information derived from the security key of the MN, the method further comprises:
after receiving an SN modification request message sent by the MN, deriving, by the SN, new security information from a new security key carried in the SN modification request message, and sending a bearer establishment request message carrying the new security information to the PCE;
after receiving a bearer establishment response message sent by the PCE, sending, by the SN, an SN modification acknowledge message to the MN and a Radio Resource Control, RRC, connection reconfiguration message to the UE;
sending, by the SN, a gate close message to the PCE, wherein the gate close message is used to instruct the PCE to suspend the sending and receiving of data of the UE to and from the SN and to instruct the PCE to trigger the re-establishment of a PDCP; and
sending, by the SN, a gate open message to the PCE after receiving an RRC connection reconfiguration completion message sent by the UE, wherein the gate open message is used to instruct the PCE to use the new security information to send and receive the data of the UE to and from the SN.

12. An anchor point determination method for supporting dual connectivity, which is applied to a Packet Co-operate Engine, PCE, deployed with a New Radio, NR, Packet Data Convergence Protocol, PDCP, layer, **characterized in that**, the PCE comprises: a memory (2001) and a processor (2002), where the memory (2001) is adapted to store an anchor point determination program for supporting dual connectivity which, when executed by the processor (2002), causes the PCE to perform the method, wherein the method comprises:
receiving, by the PCE, a bearer establishment request message sent by a Long Term Evolution, LTE, base station or an NR base station (S300); and
querying, by the PCE, according to bearer information carried by the bearer establishment request message, a PDCP entity corresponding to the bearer information, and determining, according to whether the bearer establishment request message carries security information, whether the security information used by the PDCP entity corresponding to the bearer information changes (S310); and wherein: the MN and the SN are respectively connected to the PCE; an NR PDCP layer is deployed on the PCE; and the MN and the SN are respectively configured to select the same PCE as a PDCP anchor point for a User Equipment, UE, in response to the UE establishing dual connectivity with an LTE base station and an NR base station, wherein the LTE base station is the MN and the NR base station is the SN, or the NR base station is the MN and the LTE base station is the SN; and
wherein a PDCP entity created for a radio bearer of a UE in the NR PDCP layer of the PCE selected by a Secondary Node, SN, and a Master Node, MN, uses security information derived from the security key of the MN, and the security information used by the PDCP entity on the PCE remains unchanged after the SN of the UE selects the PCE as the PDCP anchor point for the UE.

13. The method of claim 12, wherein the determining, according to whether the bearer establishment request message carries security information, whether the security information used by the PDCP entity corresponding to the bearer information changes comprises:
in a situation where the bearer establishment request message carries security information, determining, by the PCE, that the security information used by the PDCP entity corresponding to the bearer information changes, and re-establishing the PDCP entity; and
in a situation where the bearer establishment request message does not carries security information, determining, by the PCE, that the security information used by the PDCP entity corresponding to the bearer information remains unchanged.

14. A communication device (180), comprising: a memory (1801) and a processor (1802), wherein the memory (1801) is configured to store an anchor point determination program for supporting dual connectivity which, when executed by the processor (1802), causes the processor (1802) to perform a method according to any one of claims 6 to 9, or a method according to any one of claims 10 to 11.

15. A computer-readable medium storing an anchor point determination program for supporting dual connectivity which, when executed by a processor, causes the processor to perform a method of any one of claims 6 to 9, 10 to 11, and 12 to 13.

## Patentansprüche

1. System zur Bestimmung eines Ankerpunktes zur Unterstützung von dualer Konnektivität, umfassend: eine Packet Co-operate Engine, PCE, einen Master-Knoten, MN, und einen sekundären Knoten, SN, **dadurch gekennzeichnet, dass** die PCE umfasst: einen Speicher (2001) und einen Prozessor (2002), wobei der Speicher (2001) angepasst ist, um ein Programm zur Bestimmung eines Ankerpunktes zur Unterstützung von dualer Konnektivität zu speichern, das, wenn es durch den Prozessor (2002) ausgeführt wird, bewirkt, dass die PCE:
eine Trägerherstellungsanforderungsnachricht empfängt, die von einer Long Term Evolution-, LTE-, Basisstation oder einer New Radio-, NR-, Basisstation gesendet wird; und
eine Packet-Data-Convergence-Protocol, PDCP-Entität, die Trägerinformationen entspricht, gemäß Trägerinformationen, die von der Trägerherstellungsanforderungsnachricht getragen werden, abfragt und bestimmt, je nachdem ob die Trägerherstellungsanforderungsnachricht Sicherheitsinformationen trägt, ob sich die von der PDCP-Entität verwendeten Sicherheitsinformationen, die den Trägerinformationen entsprechen, ändern;
wobei:
die MN und die SN jeweils mit der PCE verbunden sind; eine NR PDCP-Schicht auf der PCE bereitgestellt ist; und
die MN und die SN jeweils dazu konfiguriert sind, als Reaktion darauf, dass das UE eine duale Konnektivität mit einer LTE-Basisstation und einer NR-Basisstation herstellt, dieselbe PCE als PDCP-Ankerpunkt für ein Benutzergerät, UE, auszuwählen, wobei die LTE-Basisstation die MN ist und die NR-Basisstation die SN ist oder die NR-Basisstation die MN ist und die LTE-Basisstation die SN ist; und
wobei eine PDCP-Entität, die für einen Funkträger des UE in der NR-PDCP-Schicht auf dem PCE erstellt wurde, so konfiguriert ist, dass sie Sicherheitsinformationen verwendet, die von einem Sicherheitsschlüssel der MN abgeleitet werden, nachdem die MN eine PCE als PDCP-Ankerpunkt für das UE ausgewählt hat; und die PDCP-Entität ferner so konfiguriert ist, dass sie die Sicherheitsinformationen verwendet, die unverändert bleiben, nachdem die SN die PCE
als PDCP-Ankerpunkt für das UE ausgewählt hat.

2. System nach Anspruch 1, wobei die MN dazu konfiguriert ist, die ausgewählte PCE als Reaktion auf das Bestimmen, die SN zu löschen, weiterhin als PDCP-Ankerpunkt beizubehalten, und die Sicherheitsinformationen, die von der PDCP-Entität auf der PCE verwendet werden, unverändert bleiben.

3. System nach Anspruch 1, wobei die von der MN und der SN für das UE ausgewählte PCE dazu konfiguriert ist, als Reaktion darauf, dass die MN die Aktualisierung eines Sicherheitsschlüssels auslöst oder die SN die Aktualisierung eines Sicherheitsschlüssels auslöst, neue Sicherheitsinformationen von der SN zu empfangen, wobei die neuen Sicherheitsinformationen von einem neuen Sicherheitsschlüssel abgeleitet werden; und
die PCE ferner dazu konfiguriert ist, das Senden von Downlink-Daten und das Empfangen von Uplink-Daten nach dem Empfangen einer Torverschlussnachricht der MN oder der SN auszusetzen und die Wiederherstellung eines PDCP auszulösen.

4. System nach Anspruch 3, wobei die PCE ferner dazu konfiguriert ist, die neuen Sicherheitsinformationen für die wiederhergestellte PDCP-Entität zu validieren, nachdem eine Toröffnungsnachricht der MN oder der SN empfangen wurde, wobei die MN oder die SN dazu konfiguriert ist, die Toröffnungsnachricht an die PCE zu senden, nachdem eine Radio Resource Control-, RRC-Verbindungsrekonfigurationsabschlussnachricht des UE detektiert wurde.

5. System nach Anspruch 1, wobei die LTE-Basisstation die MN des UE ist und die NR-Basisstation die SN des UE ist; und die MN des UE dazu konfiguriert ist, eine SN-Zusatzanforderungsnachricht an die SN zu senden und eine RRC-Verbindungsrekonfigurationsnachricht an das UE zu senden, nachdem eine SN-Zusatzbestätigungsnachricht empfangen wurde, die von der SN gesendet wurde, wobei eine Sicherheitsschlüsselauswahl SecurityConfig.keyToUse-Zelle, die von der RRC-Verbindungsrekonfigurationsnachricht getragen wird, verwendet wird, um einen Sicherheitsschlüssel KeNB der LTE-Basisstation auszuwählen.

6. Verfahren zur Bestimmung eines Ankerpunktes zur Unterstützung von dualer Konnektivität, umfassend:
Auswählen, durch einen Master-Knoten, MN, eines Benutzergeräts, UE, als Reaktion auf das Herstellen einer Kommunikationsverbindung mit dem UE, einer Packet Co-operate Engine, PCE, die mit einer New Radio, NR, Packet Data Convergence Protocol, PDCP, Schicht als PDCP-Ankerpunkt für das UE (S100) bereitgestellt wird, **dadurch gekennzeichnet, dass** die PCE umfasst: einen Speicher (2001) und einen Prozessor (2002), wobei der Speicher (2001) angepasst ist, um ein Programm zur Bestimmung eines Ankerpunktes zur Unterstützung von dualer Konnektivität zu speichern, das, wenn es durch den Prozessor (2002) ausgeführt wird, bewirkt, dass die PCE:
eine Trägerherstellungsanforderungsnachricht empfängt, die von einer Long Term Evolution, LTE, Basisstation oder einer NR-Basisstation gesendet wird; und
eine PDCP-Entität, die Trägerinformationen entspricht, gemäß Trägerinformationen, die von der Trägerherstellungsanforderungsnachricht getragen werden, abfragt und bestimmt, je nachdem ob die Trägerherstellungsanforderungsnachricht Sicherheitsinformationen trägt, ob sich die von der PDCP-Entität verwendeten Sicherheitsinformationen, die den Trägerinformationen entsprechen, ändern;
eine SN-Zusatzanforderungsnachricht, durch die MN, an einen sekundären Knoten, SN, des UE, sendet, wobei die SN-Zusatzanforderungsnachricht mindestens einen Sicherheitsschlüssel der MN und Informationen der PCE, die durch die MN für das UE (S11O) ausgewählt wurden, trägt;
eine SN-Zusatzbestätigungsnachricht, durch die MN, empfängt, die durch die SN gesendet wurde, wobei die SN-Zusatzbestätigungsnachricht Auswahlinformationen des Sicherheitsschlüssels der MN trägt und die Auswahlinformationen verwendet werden, um eine PCE anzuweisen, die durch die SN für das UE ausgewählt wurde, die gleiche zu sein wie die PCE, die durch die MN für das UE ausgewählt wurde (S120);
eine Radio Resource Control-, RRC-, Verbindungsrekonfigurationsnachricht an das UE, durch die MN, sendet, wobei die RRC-Verbindungsrekonfigurationsnachricht die Auswahlinformationen des Sicherheitsschlüssels der MN trägt (S130);
wobei die MN eine Long Term Evolution-, LTE-, Basisstation ist und die SN eine NR-Basisstation ist; oder die MN eine NR-Basisstation ist und die SN eine LTE-Basisstation ist; und
wobei eine PDCP-Entität, die für einen Funkträger des UE in der durch die MN ausgewählten NR-PDCP-Schicht des PCE erstellt wurde, Sicherheitsinformationen verwendet, die aus dem Sicherheitsschlüssel der MN abgeleitet werden, und die Sicherheitsinformationen, die von der PDCP-Entität auf der PCE verwendet werden, unverändert bleiben, nachdem die SN des UE die PCE als PDCP-Ankerpunkt für das UE ausgewählt hat.

7. Verfahren nach Anspruch 6, ferner umfassend:
weitere Beibehaltung der ausgewählten PCE als PDCP-Ankerpunkt und Senden einer Trägerherstellungsanforderungsnachricht an die PCE durch die MN als Reaktion darauf, dass die MN bestimmt, die SN aus dem UE zu löschen, wobei die Trägerherstellungsanforderungsnachricht verwendet wird, um die von der PDCP-Entität auf der PCE verwendeten Sicherheitsinformationen anzuweisen, unverändert zu bleiben; und
Senden einer RRC-Verbindungsrekonfigurationsnachricht an das UE durch die MN nach Empfangen einer Trägerherstellungsantwortnachricht, die durch die PCE gesendet wurde, wobei die RRC-Verbindungsrekonfigurationsnachricht die Auswahlinformationen des Sicherheitsschlüssels der MN trägt.

8. Verfahren nach Anspruch 6, ferner umfassend:
Senden einer SN-Änderungsanforderungsnachricht an die SN durch die MN nach Empfangen eines neuen Sicherheitsschlüssels, der von einem Kernnetzwerk gesendet wurde, oder einer SN-Änderungsanforderungsnachricht, die von der SN gesendet wurde, wobei die SN-Änderungsanforderungsnachricht den neuen Sicherheitsschlüssel trägt;
Senden einer RRC-Verbindungsrekonfigurationsnachricht an das UE und einer Torverschlussnachricht an die PCE durch die MN nach Empfangen einer SN-Änderungsbestätigungsnachricht, die von der SN gesendet wurde, wobei die Torverschlussnachricht verwendet wird, um die PCE anzuweisen, das Senden und Empfangen von Daten des UE an und von der MN auszusetzen und die PCE anzuweisen, die Wiederherstellung eines PDCP auszulösen; und
Senden einer Toröffnungsnachricht an die PCE durch die MN nach dem Empfangen einer durch das UE gesendeten RRC-Verbindungsrekonfigurationsabschlussnachricht, wobei die Toröffnungsnachricht verwendet wird, um die PCE anzuweisen, neue Sicherheitsinformationen zu verwenden, um die Daten des UE an und von der MN zu senden und zu empfangen, und die neuen Sicherheitsinformationen von der SN aus dem neuen Sicherheitsschlüssel abgeleitet werden.

9. Verfahren nach einem der Ansprüche 6 bis 8, wobei die MN des UE eine LTE-Basisstation ist und die SN des UE eine NR-Basisstation ist; und
die von der MN an das UE gesendete RRC-Verbindungsrekonfigurationsnachricht eine SecurityConfig.keyToUse-Zelle trägt, wobei die Sicherheitsschlüsselauswahl das SecurityConfig.keyToUse-Zelle verwendet wird, um einen Sicherheitsschlüssel KeNB der LTE-Basisstation auszuwählen.

10. Verfahren zur Bestimmung eines Ankerpunktes zur Unterstützung von dualer Konnektivität, umfassend:
Auswählen, durch einen sekundären Knoten, SN, eines Benutzergeräts, UE, nach dem Empfangen einer SN-Zusatzanforderungsnachricht, die von einem Master-Knoten, MN, einer Packet Co-operate Engine, PCE, gesendet wird, die mit einer New Radio, NR, Packet Data Convergence Protocol, PDCP, -Schicht als PDCP-Ankerpunkt für das UE bereitgestellt wird, **dadurch gekennzeichnet, dass** die PCE Folgendes umfasst: einen Speicher (2001) und einen Prozessor (2002), wobei der Speicher (2001) angepasst ist, um ein Programm zur Bestimmung eines Ankerpunktes zur Unterstützung von dualer Konnektivität zu speichern, das, wenn es durch den Prozessor (2002) ausgeführt wird, bewirkt, dass die PCE:
eine Trägerherstellungsanforderungsnachricht empfängt, die von einer Long Term Evolution, LTE, Basisstation oder einer NR-Basisstation gesendet wird; und
eine PDCP-Entität, die Trägerinformationen entspricht, gemäß Trägerinformationen, die von der Trägerherstellungsanforderungsnachricht getragen werden, abfragt und bestimmt, je nachdem ob die Trägerherstellungsanforderungsnachricht Sicherheitsinformationen trägt, ob sich die von der PDCP-Entität verwendeten Sicherheitsinformationen, die den Trägerinformationen entsprechen, ändern;
wobei die von der SN ausgewählte PCE die gleiche ist wie eine von der MN für die UE ausgewählte PCE (S200);
eine Trägerherstellungsanforderungsnachricht durch die SN an die PCE (S210) sendet;
eine SN-Zusatzbestätigungsnachricht, durch die SN, an die MN nach Empfangen einer Trägerherstellungsantwortnachricht sendet, die von der PCE gesendet wurde, wobei die SN-Zusatzbestätigungsnachricht Auswahlinformationen eines Sicherheitsschlüssels der MN trägt (S220);
wobei die MN eine Long Term Evolution (LTE) -Basisstation ist und die SN eine NR -Basisstation ist; oder die MN eine NR-Basisstation ist und die SN eine LTE-Basisstation ist; und
wobei eine PDCP-Entität, die für einen Funkträger eines Benutzergeräts, UE, in der NR-PDCP-Schicht der PCE erstellt wurde, die von der SN ausgewählt wurde, und die MN Sicherheitsinformationen verwendet, die aus dem Sicherheitsschlüssel der MN abgeleitet werden, und die Sicherheitsinformationen, die von der PDCP-Entität auf der PCE verwendet werden, unverändert bleiben, nachdem die SN des UE die PCE als PDCP-Ankerpunkt für das UE ausgewählt hat.

11. Verfahren nach Anspruch 10, wobei eine PDCP-Entität, die für einen Funkträger des UE in der von der SN ausgewählten NR PDCP-Schicht der PCE erstellt wurde, und die MN Sicherheitsinformationen verwendet, die von dem Sicherheitsschlüssel der MN abgeleitet werden, wobei das Verfahren ferner Folgendes umfasst:
nach dem Empfangen einer SN-Änderungsanforderungsnachricht, die von der MN gesendet wird, Ableiten neuer Sicherheitsinformationen von einem neuen Sicherheitsschlüssel, der in der SN-Änderungsanforderungsnachricht getragen wird, durch die SN und Senden einer Trägerherstellungsanforderungsnachricht, die die neuen Sicherheitsinformationen trägt, an die PCE;
nach dem Empfangen einer Trägerherstellungsantwortnachricht, die von der PCE gesendet wurde, Senden, durch die SN, einer SN-Änderungsbestätigungsnachricht an die MN und einer Radio Resource Control-, RRC-, Verbindungsrekonfigurationsnachricht an das UE;
Senden, durch die SN, einer Torverschlussnachricht an die PCE, wobei die Torverschlussnachricht verwendet wird, um die PCE anzuweisen, das Senden und Empfangen von Daten des UE an und von der SN auszusetzen und die PCE anzuweisen, die Wiederherstellung eines PDCP auszulösen; und
Senden, durch die SN, einer offenen Toröffnungsnachricht an die PCE nach dem Empfangen einer RRC-Verbindungsrekonfigurationsabschlussnachricht, die von dem UE gesendet wurde, wobei die Toröffnungsnachricht verwendet wird, um die PCE anzuweisen, die neuen Sicherheitsinformationen zum Senden und Empfangen der Daten des UE an und von der SN zu verwenden.

12. Verfahren zur Bestimmung eines Ankerpunktes zur Unterstützung von dualer Konnektivität, das auf eine Packet Co-operate Engine, PCE, angewendet wird, die mit einer New Radio, NR, Packet Data Convergence Protocol, PDCP, - Schicht bereitgestellt wird, **dadurch gekennzeichnet, dass** die PCE Folgendes umfasst: einen Speicher (2001) und einen Prozessor (2002), wobei der Speicher (2001) angepasst ist, um ein Programm zur Bestimmung eines Ankerpunktes zur Unterstützung von dualer Konnektivität zu speichern, das, wenn es durch den Prozessor (2002) ausgeführt wird, bewirkt, dass die PCE das Verfahren durchführt, wobei das Verfahren Folgendes umfasst:
Empfangen, durch die PCE, einer Trägerherstellungsanforderungsnachricht, die von einer Long Term Evolution, LTE, Basisstation oder einer NR-Basisstation (S300) gesendet wird; und
Abfragen, durch die PCE, einer PDCP-Entität, die den Trägerinformationen entspricht, gemäß Trägerinformationen, die von der Trägererrichtungsanforderungsnachricht getragen werden, und Bestimmen, je nachdem, ob die Trägererrichtungsanforderungsnachricht Sicherheitsinformationen trägt,
ob sich die von der PDCP-Entität verwendeten Sicherheitsinformationen, die den Trägerinformationen entsprechen, ändern (S310); und wobei: die MN und die SN jeweils mit der PCE verbunden sind; eine NR-PDCP-Schicht auf der PCE bereitgestellt wird; und die MN und die SN jeweils dazu konfiguriert sind, dieselbe PCE als PDCP-Ankerpunkt für ein Benutzergerät, UE, als Reaktion darauf auszuwählen, dass das UE eine duale Konnektivität mit einer LTE-Basisstation und einer NR-Basisstation herstellt, wobei die LTE-Basisstation die MN ist und die NR-Basisstation die SN ist, oder die NR-Basisstation die MN ist und die LTE-Basisstation die SN ist; und
wobei eine PDCP-Entität, die für einen Funkträger eines UE in der NR-PDCP-Schicht der PCE erstellt wurde, die von einem sekundären Knoten, SN, und einem Masterknoten, MN, ausgewählt wurde, Sicherheitsinformationen verwendet, die vom Sicherheitsschlüssel der MN abgeleitet werden, und die Sicherheitsinformationen, die von der PDCP-Entität auf der PCE verwendet werden, unverändert bleiben, nachdem die SN des UE die PCE als PDCP-Ankerpunkt für das UE ausgewählt hat.

13. Verfahren nach Anspruch 12, wobei das Bestimmen je nachdem, ob die Trägerherstellungsanforderungsnachricht Sicherheitsinformationen trägt, ob sich die von der PDCP-Entität verwendeten Sicherheitsinformationen, die den Trägerinformationen entsprechen, ändern, Folgendes umfasst:
in einer Situation, in der die Trägerherstellungsanforderungsnachricht Sicherheitsinformationen trägt, Bestimmen durch die PCE, dass sich die von der PDCP-Entität verwendeten Sicherheitsinformationen, die den Trägerinformationen entsprechen, ändern, und Wiederherstellen der PDCP-Entität; und
in einer Situation, in der die Trägerherstellungsanforderungsnachricht keine Sicherheitsinformationen trägt, Bestimmen durch die PCE, dass die von der PDCP-Einheit verwendeten Sicherheitsinformationen, die den Trägerinformationen entsprechen, unverändert bleiben.

14. Kommunikationsvorrichtung (180), umfassend: einen Speicher (1801) und einen Prozessor (1802),
wobei der Speicher (1801) dazu konfiguriert ist, ein Programm zur Bestimmung eines Ankerpunktes zur Unterstützung von dualer Konnektivität zu speichern, das, wenn es durch den Prozessor (1802) ausgeführt wird, den Prozessor (1802) veranlasst, ein Verfahren nach einem der Ansprüche 6 bis 9 oder ein Verfahren nach einem der Ansprüche 10 bis 11 durchzuführen.

15. Computerlesbares Medium, das ein Programm zur Bestimmung eines Ankerpunktes zur Unterstützung von dualer Konnektivität speichert, das, wenn es von einem Prozessor ausgeführt wird, den Prozessor veranlasst ein Verfahren nach einem der Ansprüche 6 bis 9, 10 bis 11 und 12 bis 13 durchzuführen.

## Revendications

1. Système de détermination de point d'ancrage pour la prise en charge d'une double connectivité, comprenant : un moteur de coopération par paquets, PCE, un noeud maître, MN, et un noeud secondaire, SN, **caractérisé en ce que** le PCE comprend : une mémoire (2001) et un processeur (2002), dans lequel la mémoire (2001) est adaptée pour stocker un programme de détermination de point d'ancrage pour la prise en charge d'une double connectivité qui, lorsqu'il est exécuté par le processeur (2002), amène le PCE à :
recevoir un message de demande d'établissement de support envoyé par une station de base d'évolution à long terme, LTE, ou une station de base de nouvelle radio, NR ; et
interroger une entité de protocole de convergence de données par paquets, PDCP, correspondant à des informations sur le support en fonction des informations sur le support portées par le message de demande d'établissement de support, et déterminer, selon que le message de demande d'établissement du support porte ou non des informations de sécurité, si les informations de sécurité utilisées par l'entité PDCP correspondant aux informations sur le support changent ;
dans lequel :
le MN et le SN sont respectivement connectés au PCE ; une couche PDCP NR est déployée sur le PCE ; et
le MN et le SN sont respectivement configurés pour sélectionner le même PCE comme un point d'ancrage PDCP pour un équipement d'utilisateur, UE, en réponse à l'établissement par l'UE d'une double connectivité avec une station de base LTE et une station de base NR, dans lequel la station de base LTE est le MN et la station de base NR est le SN, ou la station de base NR est le MN et la station de base LTE est le SN ; et
dans lequel une entité PDCP créée pour un support radio de l'UE dans la couche PDCP NR sur le PCE est configurée pour utiliser des informations de sécurité, qui sont dérivées d'une clé de sécurité du MN, après que le MN a sélectionné un PCE comme le point d'ancrage PDCP pour l'UE ; et l'entité PDCP est en outre configurée pour utiliser les informations de sécurité qui restent inchangées après que le MN a sélectionné le PCE
comme le point d'ancrage PDCP pour l'UE.

2. Système selon la revendication 1, dans lequel le MN est configuré pour conserver le PCE sélectionné comme le point d'ancrage PDCP en réponse à la détermination de supprimer le SN, et les informations de sécurité utilisées par l'entité PDCP sur le PCE restent inchangées.

3. Système selon la revendication 1, dans lequel le PCE sélectionné par le MN et le SN pour l'UE est configuré pour recevoir de nouvelles informations de sécurité du SN en réponse au déclenchement par le MN de la mise à jour d'une clé de sécurité ou au déclenchement par le SN de la mise à jour d'une clé de sécurité, dans lequel les nouvelles informations de sécurité sont dérivées d'une nouvelle clé de sécurité ; et
le PCE est configuré en outre pour suspendre l'envoi de données de liaison descendante et la réception de données de liaison montante après la réception d'un message de fermeture de porte du MN ou du SN, et pour déclencher le rétablissement d'un PDCP.

4. Système selon la revendication 3, dans lequel le PCE est configuré en outre pour valider les nouvelles informations de sécurité pour l'entité PDCP ré-établie après la réception d'un message d'ouverture de porte du MN ou du SN, dans lequel le MN ou le SN est configuré pour envoyer le message d'ouverture de porte au PCE après la détection d'un message d'achèvement de reconfiguration de connexion de commande de ressources radio, RRC, de l'UE.

5. Système selon la revendication 1, dans lequel la station de base LTE est le MN de l'UE et la station de base NR est le SN de l'UE ; et le MN de l'UE est configuré pour envoyer un message de demande d'ajout de SN au SN et pour envoyer un message de reconfiguration de connexion RRC à l'UE après la réception d'un message d'accusé de réception d'ajout de SN envoyé par le SN, dans lequel une cellule SecurityConfig.keyToUse de sélection de clé de sécurité portée par le message de reconfiguration de connexion RRC est utilisée pour sélectionner une clé de sécurité KeNB de la station de base LTE.

6. Procédé de détermination d'un point d'ancrage pour la prise en charge d'une double connectivité, comprenant :
la sélection, par un noeud maître, MN, d'un équipement d'utilisateur, UE, en réponse à l'établissement d'une connexion de communication avec l'UE, d'un moteur de coopération par paquets, PCE, déployé avec une couche de protocole de convergence de données par paquets, PDCP, de nouvelle radio, NR, comme un point d'ancrage PDCP pour l'UE (S100), **caractérisé en ce que** le PCE comprend : une mémoire (2001) et un processeur (2002), dans lequel la mémoire (2001) est adaptée pour stocker un programme de détermination de point d'ancrage pour la prise en charge d'une double connectivité qui, lorsqu'il est exécuté par le processeur (2002), amène le PCE à :
recevoir un message de demande d'établissement de support envoyé par une station de base d'évolution à long terme, LTE, ou une station de base NR ; et
interroger une entité PDCP correspondant à des informations sur le support en fonction des informations sur le support portées par le message de demande d'établissement de support, et déterminer, selon que le message de demande d'établissement du support porte ou non des informations de sécurité, si les informations de sécurité utilisées par l'entité PDCP correspondant aux informations sur le support changent ;
l'envoi, par le MN, d'un message de demande d'ajout de SN à un noeud secondaire, SN, de l'UE, dans lequel le message de demande d'ajout de SN porte au moins une clé de sécurité du MN et des informations du PCE sélectionné par le MN pour l'UE (S110) ;
la réception, par le MN, d'un message d'accusé de réception d'ajout de SN envoyé par le SN, dans lequel le message d'accusé de réception d'ajout de SN porte des informations de sélection de la clé de sécurité du MN, et les informations de sélection sont utilisées pour donner instruction à un PCE sélectionné par le SN pour l'UE d'être le même que le PCE sélectionné par le MN pour l'UE (S120) ;
l'envoi, par le MN, d'un message de reconfiguration de connexion de commande de ressources radio, RRC, à l'UE, dans lequel le message de reconfiguration de connexion RRC porte les informations de sélection de la clé de sécurité du MN (S130) ;
dans lequel le MN est une station de base d'évolution à long terme ,LTE, et le SN est une station de base NR ; ou le MN est une station de base NR et le SN est une station de base LTE ; et
dans lequel une entité PDCP créée pour un support radio de l'UE dans la couche PDCP NR du PCE sélectionné par le MN utilise des informations de sécurité dérivées de la clé de sécurité du MN, et les informations de sécurité utilisées par l'entité PDCP sur le PCE restent inchangées après que le SN de l'UE a sélectionné le PCE comme le point d'ancrage PDCP pour l'UE.

7. Procédé selon la revendication 6, comprenant en outre :
la conservation du PCE sélectionné comme le point d'ancrage PDCP et l'envoi d'un message de demande d'établissement de support au PCE par le MN en réponse à la détermination par le MN de supprimer le SN de l'UE, dans lequel le message de demande d'établissement de support est utilisé pour donner instruction aux informations de sécurité utilisées par l'entité PDCP sur le PCE de rester inchangées ; et
l'envoi d'un message de reconfiguration de connexion RRC à l'UE par le MN après la réception d'un message de réponse d'établissement de support envoyé par le PCE, dans lequel le message de reconfiguration de la connexion RRC porte les informations de sélection de la clé de sécurité du MN.

8. Procédé selon la revendication 6, comprenant en outre :
l'envoi d'un message de demande de modification de SN au SN par le MN après la réception d'une nouvelle clé de sécurité envoyée par un réseau central ou d'un message demandé de modification de SN envoyé par le SN, dans lequel le message de demande de modification du SN porte la nouvelle clé de sécurité ;
l'envoi d'un message de reconfiguration de connexion RRC à l'UE et d'un message de fermeture de porte au PCE par le MN après la réception d'un message d'accusé de réception de modification de SN envoyé par le SN, dans lequel le message de fermeture de porte est utilisé pour donner instruction au PCE de suspendre l'envoi et la réception de données de l'UE vers et depuis le MN et pour donner instruction au PCE de déclencher le ré-établissement d'un PDCP ; et
l'envoi d'un message d'ouverture de porte au PCE par le MN après la réception d'un message d'achèvement de reconfiguration de connexion RRC envoyé par l'UE, dans lequel le message d'ouverture de porte est utilisé pour donner instruction au PCE d'utiliser de nouvelles informations de sécurité pour envoyer et recevoir les données de l'UE vers et depuis le MN, et les nouvelles informations de sécurité sont dérivées par le SN de la nouvelle clé de sécurité.

9. Procédé selon l'une quelconque des revendications 6 à 8, dans lequel le MN de l'UE est une station de base LTE et le SN de l'UE est une station de base NR ; et
le message de reconfiguration de la connexion RRC envoyé par le MN à l'UE porte une cellule SecurityConfig.keyToUse, dans lequel la cellule SecurityConfig.keyToUse de sélection de clé de sécurité est utilisée pour sélectionner une clé de sécurité KeNB de la station de base LTE.

10. Procédé de détermination d'un point d'ancrage pour la prise en charge d'une double connectivité, comprenant :
la sélection, par un noeud secondaire, SN, d'un équipement d'utilisateur, UE, en réponse à la réception d'un message de demande d'ajout de SN envoyé par un noeud maître, MN, d'un moteur de coopération par paquets, PCE, déployé avec une couche de protocole de convergence de données par paquets, PDCP, de nouvelle radio, NR, comme un point d'ancrage PDCP pour l'UE, **caractérisé en ce que** le PCE comprend : une mémoire (2001) et un processeur (2002), dans lequel la mémoire (2001) est adaptée pour stocker un programme de détermination de point d'ancrage pour la prise en charge d'une double connectivité qui, lorsqu'il est exécuté par le processeur (2002), amène le PCE à :
recevoir un message de demande d'établissement de support envoyé par une station de base d'évolution à long terme, LTE, ou une station de base NR ; et
interroger une entité PDCP correspondant à des informations sur le support en fonction des informations sur le support portées par le message de demande d'établissement de support, et déterminer, selon que le message de demande d'établissement du support porte ou non des informations de sécurité, si les informations de sécurité utilisées par l'entité PDCP correspondant aux informations sur le support changent ;
dans lequel le PCE sélectionné par le SN est le même qu'un PCE sélectionné par le MN pour l'UE (S200) ;
l'envoi, par le SN, d'un message de demande d'établissement de support au PCE (S210) ;
l'envoi, par le SN, d'un message d'accusé de réception d'ajout de SN au MN après la réception d'un message de réponse d'établissement de support envoyé par le PCE, dans lequel le message d'accusé de réception d'ajout de SN porte des informations de sélection d'une clé de sécurité du MN (S220) ;
dans lequel le MN est une station de base d'évolution à long terme, (LTE), et le SN est une station de base NR ; ou le MN est une station de base NR et le SN est une station de base LTE ; et
dans lequel une entité PDCP créée pour un support radio d'un équipement d'utilisateur, UE, dans la couche PDCP NR du PCE sélectionné par le SN et le MN utilise des informations de sécurité dérivées de la clé de sécurité du MN, et les informations de sécurité utilisées par l'entité PDCP sur le PCE restent inchangées après que le SN de l'UE a sélectionné le PCE comme le point d'ancrage PDCP pour l'UE.

11. Procédé selon la revendication 10, dans lequel une entité PDCP créée pour un support radio de l'UE dans la couche PDCP NR du PCE sélectionné par le SN et le MN utilise des informations de sécurité dérivées de la clé de sécurité du MN, le procédé comprend en outre :
après la réception d'un message de demande de modification de SN envoyé par le MN, la dérivation, par le SN, de nouvelles informations de sécurité à partir d'une nouvelle clé de sécurité portée dans le message de demande de modification de SN, et l'envoi d'un message de demande d'établissement de support portant les nouvelles informations de sécurité au PCE ;
après la réception d'un message de réponse d'établissement de support envoyé par le PCE, l'envoi, par le SN, d'un message d'accusé de réception de modification de SN au MN et d'un message de reconfiguration de la connexion de commande de ressources radio, RRC, à l'UE ;
l'envoi, par le SN, d'un message de fermeture de porte au PCE, dans lequel le message de fermeture de porte est utilisé pour donner instruction su PCE de suspendre l'envoi et la réception de données de l'UE vers et depuis le SN et pour donner instruction au PCE de déclencher le ré-établissement d'un PDCP ; et
l'envoi, par le SN, d'un message d'ouverture de porte au PCE après réception d'un message d'achèvement de reconfiguration de connexion RRC envoyé par l'UE, dans lequel le message d'ouverture de porte est utilisé pour donner instruction au PCE d'utiliser les nouvelles informations de sécurité pour envoyer et recevoir les données de l'UE vers et depuis le SN.

12. Procédé de détermination du point d'ancrage pour la prise en charge d'une double connectivité, qui est appliquée à un moteur de coopération par paquets, PCE, déployé avec une couche de protocole de convergence de données par paquets, PDCP, de nouvelle radio, NR, **caractérisé en ce que** le PCE comprend : une mémoire (2001) et un processeur (2002), dans lequel la mémoire (2001) est adaptée pour stocker un programme de détermination de point d'ancrage pour la prise en charge d'une double connectivité qui, lorsqu'il est exécuté par le processeur (2002), amène le PCE à réaliser le procédé, dans lequel le procédé comprend :
la réception, par le PCE, d'un message de demande d'établissement de support envoyé par une station de base d'évolution à long terme, LTE, ou une station de base NR (S300) ; et
l'interrogation, par le PCE, en fonction d'informations sur le support portées par le message de demande d'établissement de support, d'une entité PDCP correspondant aux informations sur le support, et la détermination, selon que le message de demande d'établissement du support porte ou non des informations de sécurité,
si les informations de sécurité utilisées par l'entité PDCP correspondant aux informations sur le support changent (S310) ; et dans lequel : le MN et le SN sont respectivement connectés au PCE ; une couche PDCP NR est déployée sur le PCE ; et le MN et le SN sont respectivement configurés pour sélectionner le même PCE comme un point d'ancrage PDCP pour un équipement d'utilisateur, UE, en réponse à l'établissement par l'UE d'une double connectivité avec une station de base LTE et une station de base NR, dans lequel la station de base LTE est le MN et la station de base NR est le SN, ou la station de base NR est le MN et la station de base LTE est le SN ; et
dans lequel une entité PDCP créée pour un support radio d'un UE dans la couche PDCP NR du PCE sélectionné par un noeud secondaire, SN, et un noeud maître, MN, utilise des informations de sécurité dérivées de la clé de sécurité du MN, et les informations de sécurité utilisées par l'entité PDCP sur le PCE restent inchangées après que le SN de l'UE a sélectionné le PCE comme le point d'ancrage PDCP pour l'UE.

13. Procédé de la revendication 12, dans lequel la détermination, selon que le message de demande d'établissement de support porte ou non des informations de sécurité, si les informations de sécurité utilisées par l'entité PDCP correspondant aux informations sur le support changent comprend :
dans un cas où le message de demande d'établissement de support porte des informations de sécurité, la détermination, par le PCE, que les informations de sécurité utilisées par l'entité PDCP correspondant aux informations sur le support changent, et le ré-établissement de l'entité PDCP ; et
dans un cas où le message de demande d'établissement de support ne porte pas d'informations de sécurité, la détermination, par le PCE, que les informations de sécurité utilisées par l'entité PDCP correspondant aux informations sur le support restent inchangées.

14. Dispositif de communication (180) comprenant : une mémoire (1801) et un processeur (1802),
dans lequel la mémoire (1801) est configurée pour stocker un programme de détermination de point d'ancrage pour la prise en charge d'une double connectivité qui, lorsqu'il est exécuté par le processeur (1802), amène le processeur (1802) à réaliser un procédé selon l'une quelconque des revendications 6 à 9, ou un procédé selon l'une quelconque des revendications 10 à 11.

15. Support lisible par ordinateur stockant un programme de détermination du point d'ancrage pour la prise en charge d'une double connectivité qui, lorsqu'il est exécuté par un processeur, amène le processeur à réaliser un procédé selon l'une quelconque des revendications 6 à 9, 10 à 11, et 12 à 13.
